(19) Europäisches Patentamt / European Patent Office / Office européen des brevets

(11) **EP 2 587 811 A1**

(12) **EUROPEAN PATENT APPLICATION**
published in accordance with Art. 153(4) EPC

(43) Date of publication:
**01.05.2013 Bulletin 2013/18**

(51) Int Cl.:
*H04N 13/00* (2006.01)          *H04N 7/173* (2011.01)

(21) Application number: **11797973.2**

(22) Date of filing: **03.06.2011**

(86) International application number:
**PCT/JP2011/062853**

(87) International publication number:
**WO 2011/162087 (29.12.2011 Gazette 2011/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2010 JP 2010142995**

(71) Applicant: **Sony Corporation
Tokyo 108-0075 (JP)**

(72) Inventor: **TSUKAGOSHI, Ikuo
Tokyo 108-0075 (JP)**

(74) Representative: **Ealey, Douglas Ralph et al
D Young & Co LLP
120 Holborn
London EC1N 2DY (GB)**

(54) **IMAGE DATA TRANSMITTING DEVICE, CONTROL METHOD FOR IMAGE DATA TRANSMITTING DEVICE, IMAGE DATA TRANSMITTING METHOD AND IMAGE DATA RECEIVING DEVICE**

(57)     To suppress a problem occurring in three-dimensional image display due to picture frame conversion processing for reducing black belt data regions corresponding to side panels and letterboxes.

A set top box (STB) 200 receives three-dimensional image data transmitted from a broadcast station 100 over a broadcast wave, and transmits the three-dimensional image data via an HDMI cable 400 to a television receiver 300. The STB 200 has a function of picture frame conversion processing for reducing black belt data regions corresponding to side panels and letterboxes. The STB 200 performs the picture frame conversion processing in response to user's operation or automatically. When a problem occurs in three-dimensional image display due to the picture frame conversion processing, the STB 200 does not perform the picture frame conversion processing. When a transmission method of the received image data is either a side-by-side method or a top-and-bottom method, the STB 200 further determines non-execution of the picture frame conversion processing in response to a request given from a television receiver.

*FIG. 1*

10

EP 2 587 811 A1

## Description

### TECHNICAL FIELD

This invention relates to an image data transmission apparatus, a control method for an image data transmission apparatus, an image data transmission method, and an image data reception apparatus. More particularly, this invention relates to an image data transmission apparatus and the like capable of performing picture frame conversion processing on received image data, and transmitting the image data to an external device.

### BACKGROUND ART

In the past, it is known that a broadcast station transmits three-dimensional image data for displaying three-dimensional image data, and a set top box (STB) receives the three-dimensional image data, and then, this set top box transmits the three-dimensional image data to a television receiver (TV: Television) using a digital interface such as HDMI (High Definition Multimedia Interface) standard. For example, Non-Patent Document 1 describes the details of HDMI standard.

For example, Patent Document 1 suggests a transmission method using television broadcast radio wave of three-dimensional image data. In this case, three-dimensional image data including image data for the left eye and image data for the right eye are transmitted, and a television receiver displays a three-dimensional image using parallax between both of the eyes.

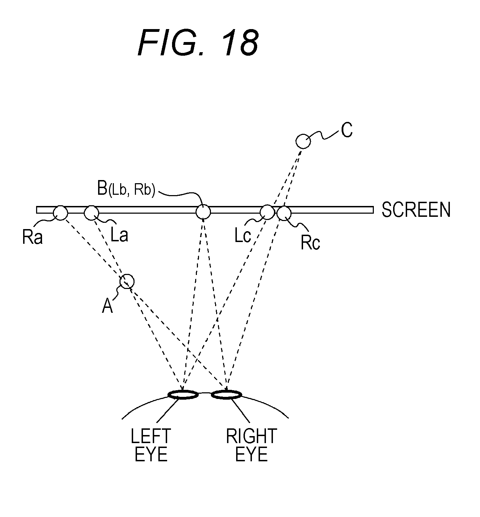

Fig. 18 illustrates, in a display of a three-dimensional image using parallax between both of the eyes, relationship between display positions of right and left images of an object on a screen and a reproduction position of the three-dimensional image. For example, as shown on the screen, an object A is displayed such that a left image La of the object A is shifted to the right side and a right image Ra of the object A is shifted to the left side, and the lines of sight of right and left eyes to the object A are crossed at a point closer to the observer than the screen surface. Accordingly, the reproduction position of the three-dimensional image of the object A is at the point closer to the observer than the screen surface.

For example, as shown on the screen, an object B is displayed such that a left image Lb of the object B and a right image Rb of the object B are at the same position, and the lines of sight of right and left eyes to the object B are crossed on the screen surface. Accordingly, the reproduction position of the three-dimensional image of the object B is on the screen surface. For example, as shown on the screen, an object C is displayed such that a left image Lc of the object C is shifted to the left side and a right image Rc of the object C is shifted to the right side, and the lines of sight of right and left eyes to the object C are crossed at a point deeper than the screen surface. Accordingly, the reproduction position of the three-dimensional image of the object C is at the point deeper than the screen surface.

### CITATION LIST

### PATENT DOCUMENT

Patent Document 1: Japanese Patent Application Laid-Open No. 2005-6114 NON-PATENT DOCUMENT

Non-Patent Document 1: High-Definition Multimedia Interface Specification Version 1.4, June 5 2009

### SUMMARY OF THE INVENTION

### PROBLEMS TO BE SOLVED BY THE INVENTION

Three-dimensional image data given by a broadcast station are transmitted in a picture frame of, for example, 1280x720, 1920x1080. When the three-dimensional image data are in a side panel format or a letterbox format, black belt data regions are included within the picture frame thereof. It should be noted that the side panel format is also referred to as a pillar box format. The set top box may perform picture frame conversion on the decoded three-dimensional image data for the purpose of minimizing the black belt data regions. When the picture frame conversion is performed, the black belt data regions corresponding to the side panel or the letterbox are reduced.

Examples of transmission methods of three-dimensional image data from a broadcast station include a side-by-side method, a top-and-bottom method, and a frame sequential method. In the side-by-side method, pixel data of left eye image data are transmitted in the first half of the horizontal direction, and pixel data of right eye image data are transmitted in the latter half of the horizontal direction. In the top-and-bottom method, data of the left eye image data in each line are transmitted in the first half of the vertical direction, and data of the right eye image data in each line are transmitted in the latter half of the vertical direction. In the frame sequential method, the left eye image data and the right eye image data are transmitted by successively switching each frame.

When the three-dimensional image data of the side-by-side method transmitted from the broadcast station are in the side panel format, a black belt data region extending in the vertical direction may exist between the left eye image data region and the right eye image data region. When the three-dimensional image data of the top-and-bottom method transmitted from the broadcast station are the letterbox format, a black belt data region extending in the horizontal direction may exist between the left eye image data region and the right eye image data region.

When the black belt data region exists between the left eye image data region and the right eye image data region, and the set top box performs the picture frame conversion to reduce the width of the black belt data region corresponding to the side panel or the letterbox as described above, there is disadvantage in that this may cause a problem in three-dimensional image display. In this case, with the picture frame conversion, displacement occurs in the display positions of the left eye image and the right eye image.

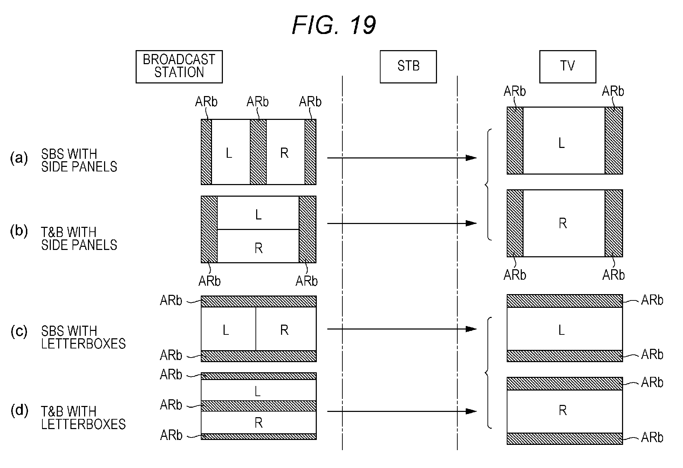

Figs. 19(a) to 19(d) illustrate an example of a case where the set top box (STB) does not perform the processing of the picture frame conversion, and no problem occurs in three-dimensional image display of the television receiver (TV). In this case, the set top box does not reduce the black belt data regions corresponding to the side panel or the letterbox. Therefore, on the television receiver, no displacement is caused in the display positions of the left eye image and the right eye image, and a three-dimensional image is displayed correctly.

Fig. 19(a) illustrates a case where three-dimensional image data of the side-by-side method transmitted from the broadcast station are in the side panel format, and a black belt data region ARb extending in the vertical direction exists between the left eye image data region and the right eye image data region. In this case, the set top box does not perform the picture frame conversion, and the three-dimensional image data transmitted from the broadcast station are sent to the television receiver (TV) without any processing.

At the television receiver, the three-dimensional image data are cut in half in the horizontal direction, and double scaling process is applied to each of them in the horizontal direction. As a result, left eye image data and right eye image data are generated. In this case, the set top box does not perform the picture frame conversion processing, and therefore, there is no change in a ratio between the width of the black belt data regions ARb at both right and left ends and the width of the black belt data region ARb existing between the left eye image data region and the right eye image data region. Therefore, on the television receiver, no displacement is caused in the display positions of the left eye image and the right eye image, and the three-dimensional image is displayed correctly.

Fig. 19(b) illustrates a case where three-dimensional image data of the top-and-bottom method transmitted from the broadcast station are in the side panel format. In this case, the set top box does not perform the picture frame conversion, and the three-dimensional image data transmitted from the broadcast station are sent to the television receiver (TV) without any processing. At the television receiver, the three-dimensional image data are cut in half in the vertical direction, and double scaling process is applied to each of them in the vertical direction. As a result, left eye image data and right eye image data are generated. In this case, no displacement is caused in the display positions of the left eye image and the right eye image, and a three-dimensional image is displayed correctly.

Fig. 19(c) illustrates a case where three-dimensional image data of the side-by-side method transmitted from the broadcast station are in the letterbox format. In this case, the set top box does not perform the picture frame conversion, and the three-dimensional image data transmitted from the broadcast station are sent to the television receiver (TV) without any processing. At the television receiver, the three-dimensional image data are cut in half in the horizontal direction, and double scaling process is applied to each of them in the horizontal direction. As a result, left eye image data and right eye image data are generated. No displacement is caused in the display positions of the left eye image and the right eye image, and a three-dimensional image is displayed correctly.

Fig. 19(d) illustrates a case where three-dimensional image data of the top-and-bottom method transmitted from the broadcast station are in the letterbox format, and a black belt data region ARb extending in the horizontal direction exists between the left eye image data region and the right eye image data region. In this case, the set top box does not perform the picture frame conversion, and the three-dimensional image data transmitted from the broadcast station are sent to the television receiver (TV) without any processing.

At the television receiver, the three-dimensional image data are cut in half in the vertical direction, and double scaling process is applied to each of them in the vertical direction. As a result, left eye image data and right eye image data are generated. In this case, the set top box does not perform the picture frame conversion processing, and therefore, there is no change in a ratio between the width of the black belt data regions ARb at both right and left ends and the width of the black belt data region ARb existing between the left eye image data region and the right eye image data region. Therefore, on the television receiver, no displacement is caused in the display positions of the left eye image and the right eye image, and a three-dimensional image is displayed correctly.

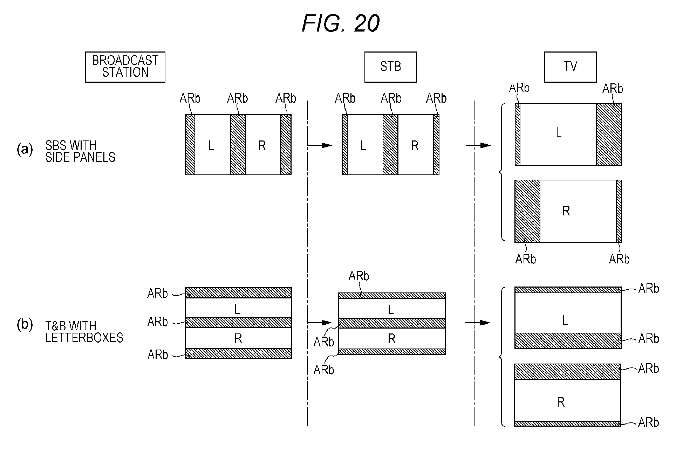

Figs. 20(a) and 20(b) illustrate an example of a case where the set top box (STB) performs the picture frame conversion, and a problem occurs in three-dimensional image display of the television receiver (TV). In this case, the set top box reduces the black belt data regions corresponding to the side panel or the letterbox. Therefore, on the television receiver, displacement is caused in the display positions of the left eye image and the right eye image, and a three-dimensional image is displayed correctly.

Fig. 20(a) illustrates a case where three-dimensional image data of the side-by-side method transmitted from the broadcast station are in the side panel format, and a black belt data region ARb extending in the vertical direction exists between the left eye image data region and the right eye image data region. In this case, the set top box performs picture frame conversion to reduce the black belt data regions ARb corresponding to the side panels, and the converted image data are sent to the television receiver (TV).

At the television receiver, the three-dimensional image data are cut in half in the horizontal direction, and double scaling process is applied to each of them in the horizontal direction. As a result, left eye image data and right eye image data are generated. In this case, the set top box performs the picture frame conversion processing, and therefore, there is change in a ratio between the width of the black belt data regions ARb at both right and left ends and the width of the black belt data region ARb existing between the left eye image data region and the right eye image data region. Therefore, on the television receiver, displacement is caused in the display positions of the left eye image and the right eye image, and a three-dimensional image is displayed correctly.

Fig. 20(b) illustrates a case where three-dimensional image data of the top-and-bottom method transmitted from the broadcast station are in the letterbox format, and a black belt data region ARb extending in the horizontal direction exists between the left eye image data region and the right eye image data region. In this case, the set top box performs picture frame conversion to reduce the black belt data regions ARb corresponding to the letterboxes, and the converted image data are sent to the television receiver (TV).

At the television receiver, the three-dimensional image data are cut in half in the vertical direction, and double scaling process is applied to each of them in the vertical direction. As a result, left eye image data and right eye image data are generated. In this case, the set top box performs the picture frame conversion processing, and therefore, there is change in a ratio between the width of the black belt data regions ARb at both right and left ends and the width of the black belt data region ARb existing between the left eye image data region and the right eye image data region. Therefore, on the television receiver, displacement is caused in the display positions of the left eye image and the right eye image, and a three-dimensional image is displayed correctly.

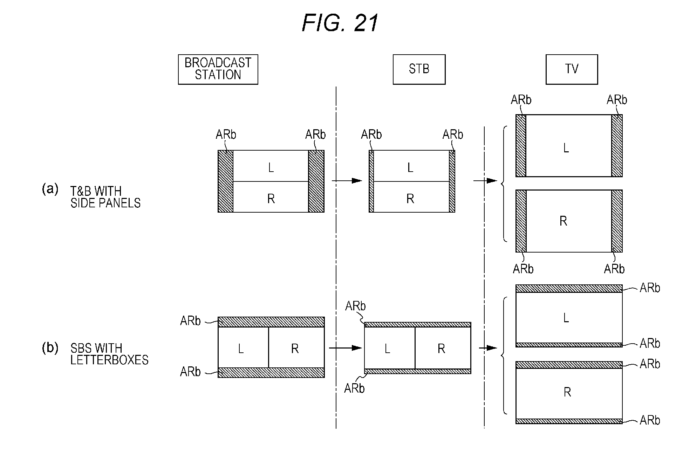

Figs. 21(a) and 21(b) show an example of a case where the set top box (STB) performs the picture frame conversion, but no problem occurs in three-dimensional image display of the television receiver (TV). In this case, the set top box reduces the black belt data regions corresponding to the side panel or the letterbox. However, on the television receiver, no displacement is caused in the display positions of the left eye image and the right eye image, and a three-dimensional image is displayed correctly.

Fig. 21(a) illustrates a case where three-dimensional image data of the top-and-bottom method transmitted from the broadcast station are in the side panel format. In this case, the set top box performs picture frame conversion to reduce the black belt data regions ARb corresponding to the side panels, and the converted image data are sent to the television receiver (TV).

At the television receiver, the three-dimensional image data are cut in half in the vertical direction, and double scaling process is applied to each of them in the vertical direction. As a result, left eye image data and right eye image data are generated. In this case, the set top box reduces the black belt data regions ARb corresponding to the side panels. Therefore, on the television receiver, no displacement is caused in the display positions of the left eye image and the right eye image, and a three-dimensional image is displayed correctly.

Fig. 21(b) illustrates a case where three-dimensional image data of the side-by-side method transmitted from the broadcast station are in the letterbox format. In this case, the set top box performs picture frame conversion to reduce the black belt data regions ARb corresponding to the letterboxes, and the converted image data are sent to the television receiver (TV).

At the television receiver, the three-dimensional image data are cut in half in the horizontal direction, and double scaling process is applied to each of them in the horizontal direction. As a result, left eye image data and right eye image data are generated. In this case, the set top box reduces the black belt data regions ARb corresponding to the letterboxes. Therefore, on the television receiver, no displacement is caused in the display positions of the left eye image and the right eye image, and a three-dimensional image is displayed correctly.

An object of this invention is to suppress a problem occurring in three-dimensional image display due to picture frame conversion processing.

SOLUTIONS TO PROBLEMS

A concept of this invention lies in an image data transmission apparatus including: an image data reception unit for receiving three-dimensional image data for displaying a three-dimensional image; an image data processing unit for processing the three-dimensional image data received by the image data reception unit; an image data transmission unit for transmitting the three-dimensional image data, which have been output from the image data processing unit, via a transmission path to an external device; and a control unit for controlling the image data processing unit, wherein when a transmission method of the three-dimensional image data received by the image data reception unit is a side-by-side method or a top-and-bottom method, the control unit controls the image data processing unit not to perform picture frame conversion processing on the three-dimensional image data.

In this invention, the image data reception unit receives the three-dimensional image data for displaying the three-dimensional image. For example, the image data reception unit receives the three-dimensional image data from a broadcast signal. For example, the image data reception unit receives the three-dimensional image data from a streaming server via a network. The three-dimensional image data are processed by the image data processing unit, and are thereafter transmitted by the image data transmission unit via the transmission path to the external device. For example, the three-dimensional image data are transmitted using a differential signal via the transmission path to the external device. Connection with the external device is made using, for example, a digital interface such as HDMI.

The control unit controls the image data processing unit. In this case, when the transmission method of the three-dimensional image data received by the image data reception unit is either the side-by-side method or the top-and-bottom method, the image data processing unit performs control so that the picture frame conversion processing is not performed on the three-dimensional image data.

As described above, in this invention, when the transmission method of the received three-dimensional image data is either the side-by-side method or the top-and-bottom method, the image data processing unit does not perform the picture frame conversion processing. A problem occurs in three-dimensional image display due to the picture frame conversion processing, when the received three-dimensional image data is three-dimensional image data of the side-by-side method (side panel format) (see Fig. 20(a)). A problem occurs in three-dimensional image display due to the picture frame conversion processing, when the received three-dimensional image data is three-dimensional image data of the top-and-bottom method (letterbox format) (see Fig. 20(b)). Therefore, this invention suppresses a problem occurring in three-dimensional image display.

In this invention, for example, when the transmission method of the three-dimensional image data received by the image data reception unit is the side-by-side method or the top-and-bottom method, and when the external device requests transmission of the three-dimensional image data without the picture frame conversion processing, the control unit may control the image data processing unit not to perform the picture frame conversion processing on the three-dimensional image data. In this case, for example, the control unit may read and obtain, via the transmission path from a storage unit provided in the external device, information indicating whether transmission of the three-dimensional image data without the picture frame conversion processing is requested or not. In this case, the control as to whether the picture frame conversion processing is performed or not may be controlled by the external device.

Another concept of this invention lies in an image data reception apparatus including: an image data reception unit for receiving three-dimensional image data, which are used to display a three-dimensional image, from an external device via a transmission path; and a control unit for controlling, via the transmission path, a picture frame conversion function for the three-dimensional image data in the external device.

In this invention, the image data reception unit receives the three-dimensional image data for displaying the three-dimensional image from the external device via the transmission path. Further, the control unit controls, via the transmission path, the picture frame conversion function for the three-dimensional image data in the external device. For example, the information indicating whether transmission of three-dimensional image data without picture frame conversion processing is requested or not is registered to a storage unit which the external device can read via the transmission path.

As described above, in this invention, the three-dimensional image data are transmitted from the external device via the transmission path, and the picture frame conversion function for the three-dimensional image data in the external device can be controlled. For example, when the picture frame conversion processing is performed, trouble may occur in three-dimensional image display (see Figs. 20(a) and 20(b)). In this case, for example, control can be performed so that the picture frame conversion processing is not performed on the three-dimensional image data in the external device, and this can suppress a problem occurring in three-dimensional image display.

Another concept of this invention lies in an image data transmission apparatus including: an image data reception unit for receiving three-dimensional image data for displaying three-dimensional image data; an image data processing unit for processing the three-dimensional image data received by the image data reception unit; an image data transmission unit for transmitting the three-dimensional image data, which are output from the image data processing unit, via a transmission path to an external device; and a control unit for controlling the image data processing unit, wherein when the three-dimensional image data received by the image data reception unit are of either a side-by-side method or a top-and-bottom method, and when the three-dimensional image data include a black belt data region between a left eye image data region and a right eye image data region, the control unit controls the image data processing unit not to perform at least picture frame conversion processing including conversion in a direction perpendicular to a longitudinal direction of the black belt data region on the three-dimensional image data.

In this invention, the image data reception unit receives the three-dimensional image data for displaying the three-dimensional image. For example, the image data reception unit receives the three-dimensional image data from a broadcast signal. For example, the image data reception unit receives the three-dimensional image data from a streaming server via a network. The three-dimensional image data are processed by the image data processing unit, and are thereafter transmitted by the image data transmission unit via the transmission path to the external device. For example, the three-dimensional image data are transmitted using a differential signal via the transmission path to the external device. Connection with the external device is made using, for example, a digital interface such as HDMI.

The control unit controls the image data processing unit. In this case, when the three-dimensional image data received by the image data reception unit are of either a side-by-side method or a top-and-bottom method, and when the three-dimensional image data include a black belt data region between a left eye image data region and a right eye image data region, the picture frame conversion processing in the image data processing unit is restricted. More specifically, at this occasion, the image data processing unit does not perform at least the picture frame conversion processing including conversion in a direction perpendicular to a longitudinal direction of the black belt data region.

For example, the control unit determines whether the three-dimensional image data include any black belt data region or not, on the basis of active format information attached to the three-dimensional image data. For example, the control unit determines whether the three-dimensional image data include any black belt data region or not, on the basis of active format information attached to the three-dimensional image data. For example, the control unit determines whether the three-dimensional image data include any black belt data region or not, by processing the three-dimensional image data. For example, the control unit makes the determination in such a manner that, when the three-dimensional image data are of a side-by-side method, the determination is made by scanning, in a vertical direction, a horizontally central portion of the image and therearound, and when the three-dimensional image data are of a top-and-bottom method, the determination is made by scanning, in a horizontal direction, a vertically central portion of the image and therearound.

In this invention, for example, when the three-dimensional image data received by the image data reception unit are of either a side-by-side method or a top-and-bottom method, and when the three-dimensional image data include a black belt data region between a left eye image data region and a right eye image data region, the control unit may permit the image data processing unit to perform picture frame conversion processing by means of linear transformation in the longitudinal direction of the black belt data region.

In this invention, for example, when the three-dimensional image data received by the image data reception unit are of either a side-by-side method or a top-and-bottom method, and when the three-dimensional image data do not include a black belt data region between a left eye image data region and a right eye image data region, the control unit permits the image data processing unit to perform picture frame conversion processing by means of linear transformation in any one of the horizontal direction and the vertical direction or both of the horizontal direction and the vertical direction.

As described above, in this invention, when the three-dimensional image data received by the image data reception unit are of either a side-by-side method or a top-and-bottom method, and when the three-dimensional image data do not include a black belt data region between a left eye image data region and a right eye image data region, the picture frame conversion processing in the image data processing unit is restricted. More specifically, the picture frame conversion processing causing a problem in three-dimensional image display is not permitted.

A problem occurs in three-dimensional image display due to the picture frame conversion processing, when the received three-dimensional image data is three-dimensional image data of the side-by-side method (side panel format), and when the three-dimensional image data do not include a black belt data region between a left eye image data region and a right eye image data region (see Fig. 20(a)). A problem occurs in three-dimensional image display due to the picture frame conversion processing, when the received three-dimensional image data is three-dimensional image data of the top-and-bottom method (letterbox format), and when the three-dimensional image data do not include a black belt data region between a left eye image data region and a right eye image data region (see Fig. 20(b)). Therefore, this invention suppresses a problem occurring in three-dimensional image display.

Another concept of this invention lies in an image data transmission apparatus including: an image data reception unit for receiving three-dimensional image data for displaying a three-dimensional image; an image data processing unit for processing three-dimensional image data received by the image data reception unit; and an image data transmission unit for transmitting three-dimensional image data, which are output from the image data processing unit, via a transmission path to an external device, wherein when the image data processing unit performs the picture frame conversion processing on the three-dimensional image data, the image data transmission unit transmits the three-dimensional image data having been subjected to the picture frame conversion processing as well as the conversion information about the picture frame conversion processing, via the transmission path to the external device.

In this invention, the image data reception unit receives the three-dimensional image data for displaying the three-dimensional image. For example, the image data reception unit receives the three-dimensional image data from a broadcast signal. For example, the image data reception unit receives the three-dimensional image data from a streaming server via a network. The three-dimensional image data are processed by the image data processing unit, and are thereafter transmitted by the image data transmission unit via the transmission path to the external device. For example, the three-dimensional image data are transmitted using a differential signal via the transmission path to the external device. Connection with the external device is made using, for example, a digital interface such as HDMI.

When the image data processing unit performs the picture frame conversion processing on the three-dimensional image data, the data transmission unit transmits the three-dimensional image data having been subjected to the picture frame conversion processing as well as the conversion information about the picture frame conversion processing, via the transmission path to the external device. In this case, for example, the conversion information is transmitted upon being inserted into the blanking period of the three-dimensional image data. For example, the conversion information includes the coefficient information of the conversion expression of the scaling processing included in the picture frame conversion processing and the specification information in two-dimensional direction of the conversion. For example, the conversion expression is expressed as $R = A*d^2 + B$, where a position from a center of an image before the picture frame conversion is denoted as d, and a scaling ratio of the position d is denoted as R, and the coefficient information is information about the above A, B.

As described above, in this invention, when the image data processing unit performs the picture frame conversion processing on the three-dimensional image data, the three-dimensional image data having been subjected to the picture frame conversion processing as well as the conversion information about the picture frame conversion processing are transmitted to the external device. Therefore, in the external device, for example, when the picture frame conversion processing causes trouble in three-dimensional image display, the received three-dimensional image data are changed back to the state before the picture frame conversion processing on the basis of the conversion information about the picture frame conversion processing, so that this suppresses a problem occurring in three-dimensional image display.

Another concept of this invention lies in an image data reception apparatus including: an image data reception unit for receiving three-dimensional image data, which are used to display a three-dimensional image, from an external device via a transmission path; and an image data processing unit for processing three-dimensional image data received by the image data reception unit, wherein the image data processing unit performs picture frame inverse-conversion processing on the three-dimensional image data, on the basis of picture frame conversion information about the three-dimensional image data received together with the three-dimensional image data by the image data reception unit.

In this invention, the image data reception unit receives the three-dimensional image data for displaying the three-dimensional image from the external device via the transmission path. The image data processing unit processes the three-dimensional image data received by the image data reception unit. The image data processing unit performs picture frame inverse-conversion processing on the three-dimensional image data, on the basis of picture frame conversion information about the three-dimensional image data received together with the three-dimensional image data by the image data reception unit.

As described above, in this invention, the received three-dimensional image data having been subjected to the picture frame conversion processing are changed back to the state before the picture frame conversion processing, on the basis of the conversion information about the picture frame conversion processing. Therefore, this suppresses a problem occurring in three-dimensional image display due to the picture frame conversion processing.

EFFECTS OF THE INVENTION

According to this invention, when a transmission method of a received three-dimensional image data is a side-by-side method or a top-and-bottom method, and the received image data are transmitted to an external device, the picture frame conversion processing is prohibited or limited. In addition, according to this invention, when the received three-dimensional image data having been subjected to the picture frame conversion processing are transmitted, conversion information is transmitted together. Therefore, this can suppress a problem occurring in three-dimensional image display due to the picture frame conversion processing.

BRIEF DESCRIPTION OF DRAWINGS

Fig. 1 is a block diagram illustrating an example of configuration of a three-dimensional image display system according to an embodiment of this invention.
Fig. 2 is a block diagram illustrating an example of configuration of a transmission data generating unit of a broadcast station constituting a three-dimensional image display system.
Fig. 3 is a flowchart illustrating a 3D format generating flow of three-dimensional image data according to a side-by-side (SBS) method or a top-and-bottom (T&B) method transmitted in a picture frame of an aspect ratio of 16: 9.
Fig. 4 is a block diagram illustrating an example of configuration of a set top box constituting a three-dimensional image display system.
Figs. 5(a) to 5(c) are figures illustrating overview of scaling processing of picture frame conversion processing (wide zoom mode, zoom mode, full mode).
Fig. 6 is a block diagram illustrating an example of configuration of a television receiver constituting a three-dimensional image display system.
Fig. 7 is a figure illustrating an example of configuration of an HDMI transmission unit (HDMI source) of a set top box and an HDMI reception unit (HDMI sink) of a television receiver in a three-dimensional image display system.

Fig. 8 is a flowchart illustrating procedure of determining processing of execution or non-execution of picture frame conversion processing performed by a CPU of a set top box.

Fig. 9 is a figure illustrating a structure of E-EDID included in a television receiver.

Fig. 10 is a figure illustrating a structure of HDMI Vendor Specific Data Block (VSDB) in an EDID structure.

Fig. 11 is a flowchart illustrating another procedure of determining processing of execution or non-execution of picture frame conversion processing performed by the CPU of the set top box.

Fig. 12 is a flowchart illustrating another procedure of determining processing of execution or non-execution of picture frame conversion processing performed by the CPU of the set top box.

Fig. 13 is a flowchart illustrating procedure of conversion permission determining processing performed by the CPU of the set top box.

Fig. 14 is a figure illustrating relationship between a position d and a scaling ratio R of scaling processing, where the position d is shown in a horizontal axis, and the scaling ratio R is shown in a vertical axis.

Figs. 15(a) to 15(c) are figures illustrating for explaining an example of application of conversion expression of scaling processing to wide zoom mode, zoom mode, and full mode.

Fig. 16 is a figure for explaining a packet structure of HDMI Vendor Specific InfoFrame including conversion information of picture frame conversion processing.

Fig. 17 is a figure for explaining information within packet structure of HDMI Vendor Specific InfoFrame including conversion information of picture frame conversion processing.

Fig. 18 a figure illustrating, in a display of a three-dimensional image using parallax between both of the eyes, relationship between display positions of right and left images of an object on a screen and a reproduction position of the three-dimensional image.

Figs. 19(a) to 19(d) is a figure illustrating an example of a case where the set top box (STB) does not perform the processing of the picture frame conversion, and no problem occurs in three-dimensional image display of the television receiver (TV).

Figs. 20(a) and 20(b) is a figure illustrating an example of a case where the set top box (STB) performs the picture frame conversion, and a problem occurs in three-dimensional image display of the television receiver (TV).

Figs. 21(a) and 21(b) is a figure illustrating an example of a case where the set top box (STB) performs the picture frame conversion, but no problem occurs in three-dimensional image display of the television receiver (TV).

MODE FOR CARRYING OUT THE INVENTION

Hereinafter, a mode for carrying out the invention (hereinafter referred to as embodiment) will be explained. It should be noted that the explanation will be made in the following order.

1. Embodiment

2. Modification

<1. Embodiment>

[Example of configuration of three-dimensional image display system]

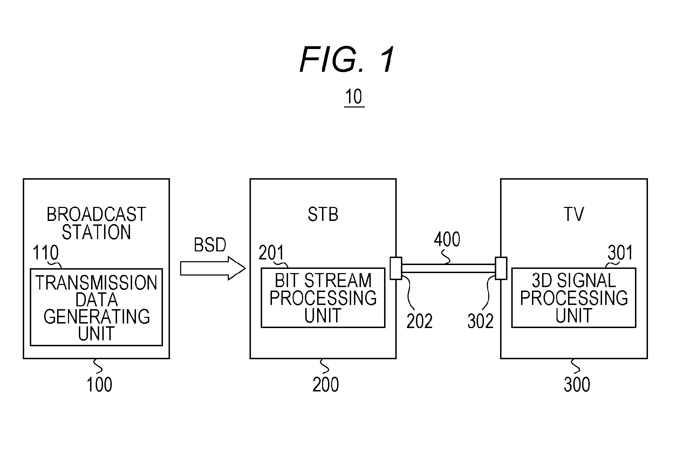

Fig. 1 illustrates an example of configuration of a three-dimensional image display system 10 according to an embodiment. This three-dimensional image display system 10 includes a broadcast station 100, a set top box (STB) 200, and a television receiver (TV) 300.

The set top box 200 and the television receiver 300 are connected via an HDMI (High Definition Multimedia Interface) cable 400. The set top box 200 is provided with an HDMI terminal 202. The television receiver 300 is provided with an HDMI terminal 302. One end of the HDMI cable 400 is connected to the HDMI terminal 202 of the set top box 200, and the other end of the HDMI cable 400 is connected to the HDMI terminal 302 of the television receiver 300.

[Explanation about broadcast station]

The broadcast station 100 transmits bit stream data with a broadcast wave. The broadcast station 100 is provided with a transmission data generating unit 110 generating bit stream data BSD. The bit stream data BSD includes three-dimensional image data for displaying a three-dimensional image, audio data corresponding to the three-dimensional image data, and the like. Examples of transmission formats of three-dimensional image data transmitted from the broadcast station includes a side-by-side method, a top-and-bottom method, and a frame sequential method.

"Example of configuration of transmission data generating unit"

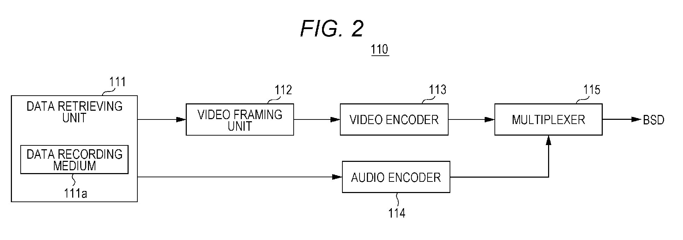

Fig. 2 illustrates an example of configuration of a transmission data generating unit 110 generating the above bit stream data BSD in the broadcast station 100. This transmission data generating unit 110 includes a data retrieving unit (archiving unit) 111, a video framing unit 112, a video encoder 113, an audio encoder 114, and a multiplexer 115.

For example, a data recording medium 111a is detachably attached to the data retrieving unit 111. This data recording medium 111a is recorded with the left eye image data and the right eye image data for constituting three-dimensional (3D) image data, and is further recorded with audio data in association with the image data. The data retrieving unit 111 retrieves image data (left eye image data, right eye image data) and audio data corresponding thereto from the data recording medium 111a, and outputs the image data and the audio data. The data recording medium 111a is a disk-shaped recording medium, a semiconductor memory, and the like.

The video framing unit 112 generates three-dimensional image data according to a predetermined transmission method such as the side-by-side method, the top-and-bottom method, and the frame sequential method, on the basis of the image data (the left eye image data, the right eye image data) transmitted from the data retrieving unit 111. The video framing unit 112 generates three-dimensional image data in a pixel format such as 1280x720 and 1920x1080. In such case, the three-dimensional image data may be generated in a side panel format or a letterbox format in accordance with the pixel format of an original image given by the data retrieving unit 111.

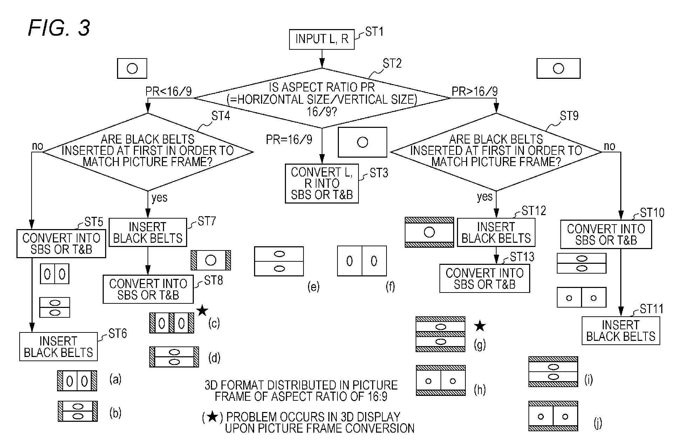

Fig. 3 illustrates a 3D format generating flow which is performed by the video framing unit 112 to generate three-dimensional image data according to a side-by-side (SBS) method or a top-and-bottom (T&B) method transmitted in a picture frame of an aspect ratio of 16: 9. After the left eye (L) image data and the right eye (R) image data are input in step ST1, the video framing unit 112 determines whether the aspect ratio PR is 16/9 or not in step ST2.

When PR = 16/9 holds, the video framing unit 112 converts the left eye image data and the right eye image data into the three-dimensional image data of the side-by-side method or the top-and-bottom method in step ST3. The three-dimensional image data of the side-by-side method are generated by respectively compressing the left eye image data and the right eye image data by 1/2 in the horizontal direction and arranging them in the horizontal direction. The three-dimensional image data of the top-and-bottom method are generated by respectively compressing the left eye image data and the right eye image data by 1/2 in the vertical direction and arranging them in the vertical direction.

In this case, the aspect ratio PR of the original image data (left eye image data, right eye image data) is 16/9. Therefore, the aspect ratio of the three-dimensional image data converted according to the side-by-side method or the top-and-bottom method is 16/9. Therefore, in this case, no black belt is inserted to match the picture frame, and the three-dimensional image data generated by the video framing unit 112 are neither in the side panel format nor in the letterbox format (see (e), (f)).

When PR<16/9 holds in step ST2, a determination is made as to whether black belts are inserted at first in order to match the picture frame in step ST4. When the black belts are determined not to be inserted at first, the video framing unit 112 converts the left eye image data and the right eye image data into three-dimensional image data (L/R interleave image data) of the side-by-side method or the top-and-bottom method in step ST5. In this case, the aspect ratio PR of the original image data (left eye image data, right eye image data) is less than 16/9. Therefore, the aspect ratio of the three-dimensional image data converted according to the side-by-side method or the top-and-bottom method is less than 16/9.

Then, in step ST6, the video framing unit 112 inserts the black belts to match the picture frame. In this case, the black belt data regions corresponding to the side panels are inserted to the right and left ends of the three-dimensional image data converted according to the side-by-side method or the top-and-bottom method. More specifically, in this case, the three-dimensional image data generated by the video framing unit 112 are in the side panel format (see (a), (b)). However, since the black belts are inserted after the conversion according to the side-by-side method or the top-and-bottom method, there is no black belt data region between the left eye image data region and the right eye image data region.

When the black belts are determined to be inserted at first in step ST4, the video framing unit 112 inserts the black belts to match the picture frame in step ST7. In this case, the black belt data regions corresponding to the side panels are inserted to the right and left ends of the left eye image data and the right eye image data. When the black belt data regions are inserted, the aspect ratio of the left eye image data and the right eye image data is 16/9.

Then, in step ST8, the video framing unit 112 converts the left eye image data and the right eye image data into three-dimensional image data of the side-by-side method or the top-and-bottom method. In this case, the three-dimensional image data generated by the video framing unit 112 are in the side panel format in which there are black belt data regions at the right and left ends of the three-dimensional image data. In this case, the three-dimensional image data of the side-by-side method include the black belt data regions at the right and left ends, and include the black belt data region extending in the vertical direction between the left eye image data region and the right eye image data region (see (c)). On the other hand, the three-dimensional image data of the top-and-bottom method include the black belt data regions at the right and left ends, but do not include any black belt data region between the left eye image data region and the right eye image data region.

When PR>16/9 does not hold in step ST2, a determination is made as to whether black belts are inserted at first in order to match the picture frame in step ST9. When the black belts are determined not to be inserted at first, the video framing unit 112 converts the left eye image data and the right eye image data into three-dimensional image data (L/R interleave image data) of the side-by-side method or the top-and-bottom method in step ST10. In this case, the aspect ratio PR of the original image data (left eye image data, right eye image data) is more than 16/9. Therefore, the aspect ratio of the three-dimensional image data converted according to the side-by-side method or the top-and-bottom method is more than 16/9.

Then, in step ST11, the video framing unit 112 inserts the black belts to match the picture frame. In this case, the black belt data regions corresponding to the letterboxes are inserted to the upper and lower ends of the three-dimensional image data converted according to the side-by-side method or the top-and-bottom method. More specifically, in this case, the three-dimensional image data generated by the video framing unit 112 are in the letterbox format (see (i), (j)). However, since the black belts are inserted after the conversion according to the side-by-side method or the top-and-bottom method, there is no black belt data region between the left eye image data region and the right eye image data region.

When the black belts are determined to be inserted at first in step ST9, the video framing unit 112 inserts the black belts to match the picture frame in step ST12. In this case, the black belt data regions corresponding to the letterboxes are inserted to the upper and lower ends of the left eye image data and the right eye image data. When the black belt data regions are inserted, the aspect ratio of the left eye image data and the right eye image data is 16/9.

Then, in step ST13, the video framing unit 112 converts the left eye image data and the right eye image data into three-dimensional image data of the side-by-side method or the top-and-bottom method. In this case, the three-dimensional image data generated by the video framing unit 112 are in the letterbox format in which there are black belt data regions at the upper and lower ends of the three-dimensional image data. In this case, the three-dimensional image data of the top-and-bottom method include the black belt data regions at the upper and lower ends, and include the black belt data region extending in the horizontal direction between the left eye image data region and the right eye image data region (see (g)). On the other hand, the three-dimensional image data of the side-by-side method include the black belt data regions at the upper and lower ends, but do not include any black belt data region between the left eye image data region and the right eye image data region.

As described above, the three-dimensional image data of the side-by-side method or the top-and-bottom method generated by the video framing unit 112 include those in the side panel format and in the letterbox format, and those in formats other than the above. The three-dimensional image data in the side panel format of the side-by-side method include those having the black belt data region between the right eye image data region and the left eye image data region (see (c)). The three-dimensional image data in the letterbox format of the top-and-bottom method include those having the black belt data region between the right eye image data region and the left eye image data region (see (g)).

Back to Fig. 2, the video encoder 113 encodes the three-dimensional image data generated by the video framing unit 112 with MPEG4-AVC, MPEG2, VC-1, and the like, thereby generating an image data stream (video elementary stream). This image data stream may include AFD (Active Format Description). This AFD is also defined in "CEA-861". When four-bit data representing the active format (Active_format) in the AFD indicate "full" (16: 9), i.e., when the four-bit data are those other than '0100', '1001', '1011', '1101', this means that no black belt is inserted at last in order to make the picture frame into 16: 9.

In the side-by-side method, AFDs corresponding to "full" include the cases of (c), (f), (h) in Fig. 3 explained above. As explained above, in the 3D format of (c) in which there is the black belt data region extending in the vertical direction between the left eye image data region and the right eye image data region, picture frame conversion processing causes trouble in three-dimensional image display. In the top-and-bottom method, AFDs corresponding to "full" include the cases of (d), (e), (g) in Fig. 3 explained above. As explained above, in the 3D format of (g) in which there is the black belt data region extending in the horizontal direction between the left eye image data region and the right eye image data region, picture frame conversion processing for reducing the width of the black belt data region causes trouble in three-dimensional image display.

When four-bit data of the above AFD indicate those other than "full" (16: 9), it means that the black belt is inserted at last in order to make the picture frame into 16: 9. AFDs corresponding to those other than "full" include the cases of (a), (b), (i), (j) in Fig. 3 explained above. In the 3D format, the picture frame conversion processing for reducing the width of the black belt data region does not cause any trouble. However, in the picture frame conversion processing, only linear transformation is allowed so that relative positions of the left eye image and the right eye image are not moved.

Back to Fig. 2, the audio encoder 114 encodes the audio data provided by the data retrieving unit 111 with AC3, AAC, and the like, thereby generating an audio data stream. The multiplexer 115 multiplexes the image data stream, which is output from the video encoder 113, and the audio compressed data stream, which is output from the audio encoder 114. Then, the multiplexer 115 generates bit stream data (transport stream) BSD serving as the multiplexed data stream and outputs the bit stream data BSD.

Operation performed by the transmission data generating unit 110 as shown in Fig. 2 will be briefly explained. The image data (left eye image data, right eye image data) which are output from the data retrieving unit 111 are provided to the video framing unit 112. This video framing unit 112 generates three-dimensional image data of predetermined transmission method such as side-by-side method, top-and-bottom method, and frame sequential method, on the basis of the image data (left eye image data, right eye image data). In this case, three-dimensional image data of a pixel format such as 1280x720, 1920x1080 are generated. In accordance with the pixel format of the original image data, the three-dimensional image data may be generated in the side panel format or the letterbox format.

The three-dimensional image data generated by the video framing unit 112 are provided to the video encoder 113. This video encoder 113 encodes the three-dimensional image data such as MPEG4-AVC, MPEG2, VC-1, and an image data stream (video elementary stream) including the encoded video data is generated. This image data stream may include AFD. In this AFD, four-bit data representing the active format are described. This image data stream is provided to the multiplexer 115.

The audio data which are output from the data retrieving unit 111 are provided to the audio encoder 114. This audio encoder 114 encodes the audio data provided by the data retrieving unit 111 with AC3, AAC, and the like, thereby generating an audio compressed data stream (audio elementary stream). This audio data stream is provided to the multiplexer 115. The multiplexer 115 makes the data stream (elementary stream) provided by each encoder into packets and multiplexes the data streams (elementary streams), and obtains bit stream data (transport stream) BSD serving as transmission data.

[Explanation about set top box]

The set top box 200 receives bit stream data (transport stream) transmitted from the broadcast station 100 over a broadcast wave. As explained above, the bit stream data includes three-dimensional image data, audio data, and the like. The set top box 200 includes a bit stream processing unit 201. This bit stream processing unit 201 extracts the three-dimensional image data, the audio data, and the like from the bit stream data.

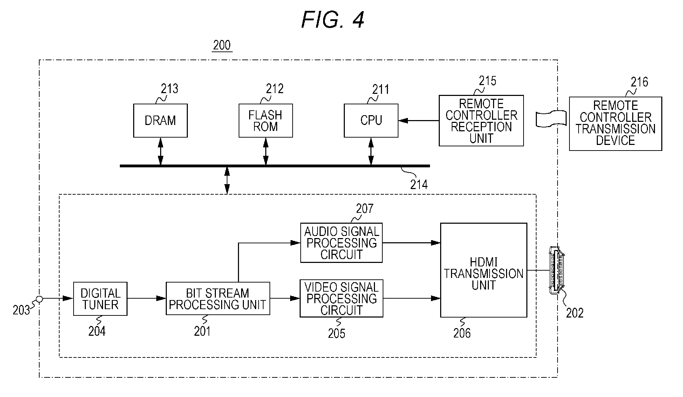

Fig. 4 illustrates an example of configuration of the set top box 200. This set top box 200 includes a bit stream processing unit 201, an HDMI terminal 202, an antenna terminal 203, a digital tuner 204, a video signal processing circuit 205, an HDMI transmission unit 206, and an audio signal processing circuit 207. In addition, this set top box 200 includes a CPU 211, a flash ROM 212, a DRAM 213, an internal bus 214, a remote controller reception unit 215, and a remote controller transmission device 216.

The CPU 211 controls operation of each unit of the set top box 200. The flash ROM 212 stores control software and retains data. The DRAM 213 constitutes a work area of the CPU 211. The CPU 211 activates software by extracting software and data, which are read from the flash ROM 212, to the DRAM 213, and controls each unit of the set top box 200.

The remote controller reception unit 215 receives a remote control signal (remote controller code) transmitted from the remote controller transmission device 216, and provides the remote control signal (remote controller code) to the CPU 211. The CPU 211 controls each unit of the set top box 200 on the basis of this remote controller code. The CPU 211, the flash ROM 212, and the DRAM 213 are connected to the internal bus 214.

The antenna terminal 203 is a terminal receiving a television broadcast signal received by a reception antenna (not shown). The digital tuner 204 processes the television broadcast signal which is input into the antenna terminal 203, and outputs predetermined bit stream data (transport stream) BSD corresponding to the user's selection channel. As explained above, the bit stream processing unit 201 extracts three-dimensional image data, audio data, and the like from the bit stream data.

The video signal processing circuit 205 performs image adjusting processing, picture frame conversion processing, and the like on the three-dimensional image data (received three-dimensional image data) which are output from the bit stream processing unit 201, and provides the processed three-dimensional image data to the HDMI transmission unit 206. In this case, when the received three-dimensional image data are in a side panel format or in a letterbox format, the picture frame conversion processing is processing for reducing the width of the black belt data region. This picture frame conversion processing is automatically done, for example, in accordance with user's operation or on the basis of detection of the black belt data regions at the right and left ends and at the upper and lower ends of the received three-dimensional image data.

This picture frame conversion processing includes any one of the horizontal direction and the vertical direction, or both of scaling processing, so that the number of pixels in the horizontal direction and the vertical direction of the three-dimensional image data of which width of the black belt data region is reduced matches the picture frame of the transmission format of HDMI.

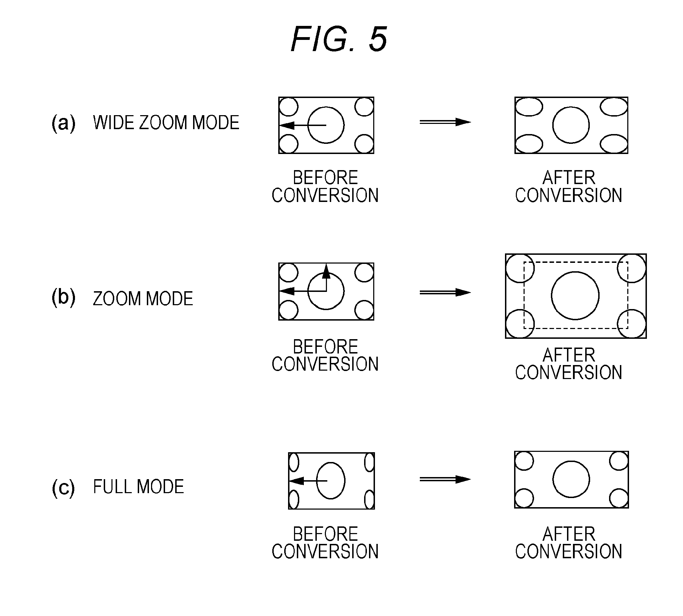

Fig. 5(a) illustrates overview of scaling processing in picture frame conversion processing called a wide zoom mode. This wide zoom mode is used, for example, for the purpose of reducing the black belt data region portions of the side panels existing at the right and left ends of the image data. In this case, scaling process with a nonlinear scaling ratio in the horizontal direction is performed on the image data before the conversion (before the scaling process). More specifically, the enlargement rate is reduced in the center of the image and in proximity thereto, so that the image distortion is suppressed. On the contrary, the enlargement rate is increased as it gets closer to the right and left ends of the image.

Fig. 5(b) illustrates overview of scaling processing in picture frame conversion processing called a zoom mode. This zoom mode is used, for example, for the purpose of reducing the black belt data region portions of the letterboxes existing at the upper and lower ends of the image data. In this case, scaling process with a linear scaling ratio in the vertical direction and the horizontal direction is performed on the image data before the conversion (before the scaling process).

Fig. 5(c) illustrates overview of scaling processing in picture frame conversion processing called a full mode. This zoom mode is used, for example, for the purpose of reducing the black belt data region portions of the letterboxes existing at the right and left ends of the image data squeezed in the horizontal direction. In this case, scaling process with a linear scaling ratio in the horizontal direction is performed on the image data before the conversion (before the scaling process).

In this embodiment, for example, the video signal processing circuit 205 prohibits or limits this picture frame conversion processing in order to prevent a problem in three-dimensional image display due to the picture frame conversion processing. The details of prohibition and limitation of this picture frame conversion processing will be explained later.

The audio signal processing circuit 207 performs, as necessary, sound quality adjusting processing and the like, on the audio data which are output from the bit stream processing unit 201, and provides the processed audio data to the HDMI transmission unit 206. The HDMI transmission unit 206 transmits, from the HDMI terminal 202, three-dimensional image data and audio data in baseband by means of communication based on the HDMI. This HDMI transmission unit 206 is ready to handle the three-dimensional image data. Since the HDMI transmission unit 206 transmits in the TMDS channel of HDMI, image and audio data are packed to output the data to the HDMI terminal 202. The details of this HDMI transmission unit 206 will be explained later.

In this embodiment, in the TMDS channel of HDMI, the HDMI transmission unit 206 transmits, for example, conversion information about the picture frame conversion processing as well as the three-dimensional image data obtained by performing the picture frame conversion processing, in order to prevent trouble caused in three-dimensional image display by the picture frame conversion processing performed by the video signal processing circuit 205. The details of transmission of the conversion information will be explained later.

Operation of the set top box 200 will be briefly explained. The television broadcast signal which is input into the antenna terminal 203 is provided to the digital tuner 204. The digital tuner 204 processes the television broadcast signal, and outputs predetermined bit stream data (transport stream) BSD corresponding to the user's selection channel.

The bit stream data BSD which are output from the digital tuner 204 are provided to the bit stream processing unit 201. This bit stream processing unit 201 extracts three-dimensional image data, audio data, and the like included in the bit stream data. The three-dimensional image data which are output from this bit stream processing unit 201 are provided to the video signal processing circuit 205. This video signal processing circuit 205 performs image adjusting processing, picture frame conversion processing, and the like on the three-dimensional image data (received three-dimensional image data) which are output from the bit stream processing unit 201.

The three-dimensional image data which are processed and output by the video signal processing circuit 205 are provided to the HDMI transmission unit 206. The audio signal processing circuit 207 performs sound quality adjusting processing and the like on the audio data obtained by the bit stream processing unit 201 as necessary, and thereafter, processed audio data are provided to the HDMI transmission unit 206. The HDMI transmission unit 206 packs the three-dimensional image data and the audio data, and transmits the data from the HDMI terminal 202 to the HDMI cable 400.

[Explanation about television receiver]

Back to Fig. 1, the television receiver 300 receives the three-dimensional image data transmitted via the HDMI cable 400 from the set top box 200. This television receiver 300 includes a 3D signal processing unit 301. This 3D signal processing unit 301 performs processing (decode processing) corresponding to the transmission method on the three-dimensional image data, and obtains the left eye image data and the right eye image data.

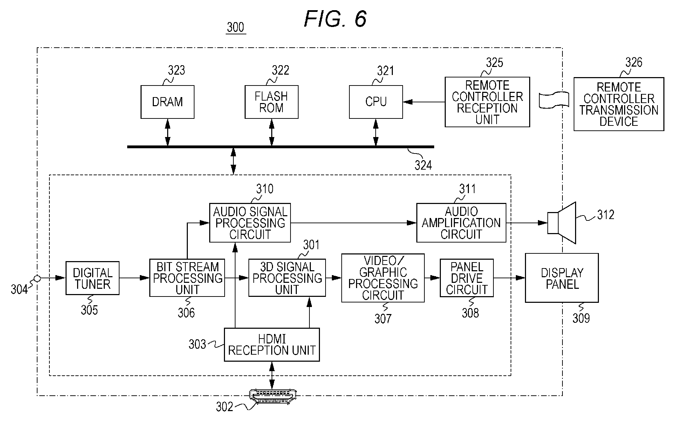

Fig. 6 is an example of configuration of the television receiver 300. This television receiver 300 includes a 3D signal processing unit 301, an HDMI terminal 302, an HDMI reception unit 303, an antenna terminal 304, a digital tuner 305, and a bit stream processing unit 306. This television receiver 300 includes a video/graphic processing circuit 307, a panel drive circuit 308, a display panel 309, an audio signal processing circuit 310, an audio amplification circuit 311, and a speaker 312. This television receiver 300 includes a CPU 321, a flash ROM 322, a DRAM 323, an internal bus 324, a remote controller reception unit 325, and a remote controller transmission device 326.

The CPU 321 controls operation of each unit of the television receiver 300. The flash ROM 322 stores control software and retains data. The DRAM 323 constitutes a work area of the CPU 321. The CPU 321 activates software by extracting software and data, which are read from the flash ROM 322, to the DRAM 323, and controls each unit of the television receiver 300.

The remote controller reception unit 325 receives a remote control signal (remote controller code) transmitted from the remote controller transmission device 326, and provides the remote control signal (remote controller code) to the CPU 321. The CPU 321 controls each unit of the television receiver 300 on the basis of this remote controller code. The CPU 321, the flash ROM 322, and the DRAM 323 are connected to the internal bus 324.

The antenna terminal 304 is a terminal receiving a television broadcast signal received by a reception antenna (not shown). The digital tuner 305 processes the television broadcast signal which is input into the antenna terminal 304, and outputs predetermined bit stream data (transport stream) corresponding to the user's selection channel.

The bit stream processing unit 306 has the same configuration as the bit stream processing unit 201 of the set top box 200 as shown in Fig. 4. This bit stream processing unit 306 extracts the three-dimensional image data, the audio data, and the like from the bit stream data. The HDMI reception unit 303 receives the three-dimensional image data and the audio data provided to the HDMI terminal 302 via the HDMI cable 400 by means of communication based on the HDMI. This HDMI reception unit 303 is ready to handle the three-dimensional image data. The details of this HDMI reception unit 303 will be explained later.

The 3D signal processing unit 301 performs decode processing on the three-dimensional image data received by the HDMI reception unit 303 or the three-dimensional image data obtained by the bit stream processing unit 306, and generates left eye image data and right eye image data. In this case, the 3D signal processing unit 301 performs decode processing corresponding to the format on the three-dimensional image data. The video/graphic processing circuit 307 generates image data for displaying a three-dimensional image, on the basis of the left eye image data and right eye image data generated by the 3D signal processing unit 301.

In this embodiment, for example, when a problem occurs in three-dimensional image display due to the picture frame conversion processing which is performed by the set top box 200 on the three-dimensional image data, the 3D signal processing unit 301 performs inverse-conversion processing on the received three-dimensional image data and thereafter performs the above decode processing. The details of the inverse-conversion processing performed on this received three-dimensional image data will be explained later.

The video/graphic processing circuit 307 also performs image adjusting processing on the image data as necessary. As necessary, the video/graphic processing circuit 307 combines data of superimposed information such as a menu and a program table with the image data. The panel drive circuit 308 drives the display panel 309, based on the image data which are output from the video/graphic processing circuit 307. For example, the display panel 309 is constituted by an LCD (Liquid Crystal Display), a PDP (Plasma Display Panel), and the like.

The audio signal processing circuit 310 performs required processing such as D/A conversion on the audio data obtained by the bit stream processing unit 306 or received by the HDMI reception unit 303. The audio amplification circuit 311 amplifies the audio signal which is output from the audio signal processing circuit 310, and provides the amplified audio signal to the speaker 312.

Operation of the television receiver 300 as shown in Fig. 6 will be briefly explained. The HDMI reception unit 303 receives the three-dimensional image data and the audio data transmitted from the set top box 200 connected to the HDMI terminal 302 via the HDMI cable 400. The three-dimensional image data received by this HDMI reception unit 303 are provided to the 3D signal processing unit 301. On the other hand, the audio data received by this HDMI reception unit 303 are provided to the audio signal processing circuit 310.

The television broadcast signal which is input into the antenna terminal 304 is provided to the digital tuner 305. The digital tuner 305 processes the television broadcast signal, and outputs predetermined bit stream data (transport stream) corresponding to the user's selection channel.

The bit stream data which are output from the digital tuner 305 are provided to the bit stream processing unit 306. This bit stream processing unit 306 extracts three-dimensional image data, audio data, and the like included in the bit stream data. The three-dimensional image data extracted by the bit stream processing unit 306 are provided to the 3D signal processing unit 301. The audio data extracted by the bit stream processing unit 306 are provided to the audio signal processing circuit 310.

The 3D signal processing unit 301 performs decode processing on the three-dimensional image data received by the HDMI reception unit 303 or the three-dimensional image data obtained by the bit stream processing unit 306, and generates left eye image data and right eye image data. The left eye image data and the right eye image data are provided to the video/graphic processing circuit 307. The video/graphic processing circuit 307 generates image data for displaying a three-dimensional image on the basis of the left eye image data and the right eye image data, and also performs the image adjusting processing and combining processing of superimposed information data, as necessary.

The image data obtained by this video/graphic processing circuit 307 are provided to the panel drive circuit 308. Therefore, the display panel 309 displays the three-dimensional image. For example, on the display panel 309, left eye images based on the left eye image data and right eye images based on the right eye image data are alternately displayed in a time-divisional manner. The viewer wears shutter glasses, of which left eye shutter and right eye shutter open alternately in synchronization with display of the display panel 309, so that the viewer can see the left eye image with only the left eye and can see the right eye image with only the right eye, thus capable of perceiving a three-dimensional image.

The audio signal processing circuit 310 performs required processing such as D/A conversion on the audio data obtained by the bit stream processing unit 306 or received by the HDMI reception unit 303. The audio data are amplified by the audio amplification circuit 311, and are thereafter provided to the speaker 312. For this reason, sound corresponding to the display image of the display panel 309 is output from the speaker 312.

[Example of configuration of HDMI transmission unit and HDMI reception unit]

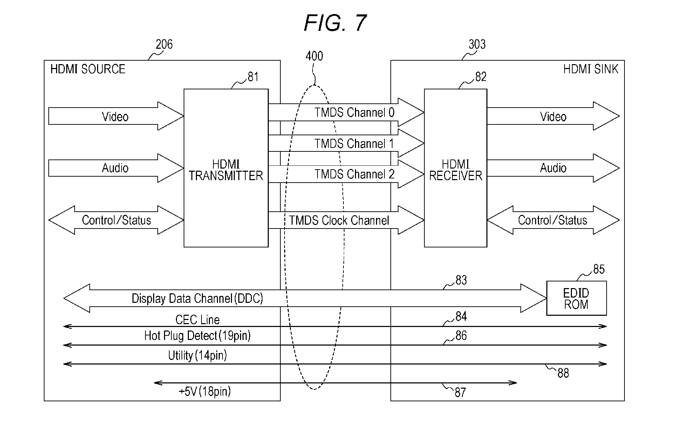

Fig. 7 illustrates an example of configuration of the HDMI transmission unit (HDMI source) 206 of the set top box 200 and the HDMI reception unit (HDMI sink) 303 of the television receiver 300 in the three-dimensional image display system 10 of Fig. 1.

In an effective image section (which may be hereinafter also referred to as active video section as necessary), the HDMI transmission unit 206 transmits a differential signal corresponding to pixel data of an uncompressed image in one screen to the HDMI reception unit 303 in one way using multiple channels. In this case, the effective image section means a section between a certain vertical synchronization signal to a subsequent vertical synchronization signal except a horizontal retrace line section and a vertical retrace line section. In the horizontal retrace line section or the vertical retrace line section, the HDMI transmission unit 206 transmits a differential signal corresponding to audio data, control data, other auxiliary data, and the like at least accompanying the image using multiple channels to the HDMI reception unit 303 in one way.

The transmission channels of the HDMI system including the HDMI transmission unit 206 and the HDMI reception unit 303 includes the following channels. More specifically, there are three TMDS channels #0 to #2 serving as transmission channels for serially transmitting, in one way, pixel data and audio data from the HDMI transmission unit 206 to the HDMI reception unit 303 in synchronization with the pixel clock. There is also a TMDS clock channel serving as a transmission channel for transmitting a pixel clock.

The HDMI transmission unit 206 includes an HDMI transmitter 81. For example, the transmitter 81 converts pixel data of an uncompressed image into a corresponding differential signal, and serially transmits, in one way, the differential signal to the HDMI reception unit 303 connected via the HDMI cable 400 using three TMDS channels #0, #1, #2 which are multiple channels.

The transmitter 81 also converts corresponding to audio data, required control data, other auxiliary data, and the like accompanying the uncompressed image into a corresponding differential signal, and serially transmits, in one way, the differential signal to the HDMI reception unit 303 using three TMDS channels #0, #1, #2.

Further, the transmitter 81 transmits a pixel clock, which is in synchronization with the pixel data transmitted using three TMDS channels #0, #1, #2, to the HDMI reception unit 303 connected via the HDMI cable 400 in a TMDS clock channel. In this case, 10 bits of pixel data are transmitted in one clock of pixel clock in one TMDS channel #i (i=0, 1, 2).

The HDMI reception unit 303 receives the differential signal corresponding to the pixel data transmitted in the active video section in one way from the HDMI transmission unit 206 using multiple channels. In the horizontal retrace line section or the vertical retrace line section, the HDMI reception unit 303 receives the differential signal corresponding to audio data and control data, which is transmitted using multiple channels in one way from the HDMI transmission unit 206.

More specifically, the HDMI reception unit 303 includes an HDMI receiver 82. The HDMI receiver 82 receives the differential signal corresponding to the pixel data and the differential signal corresponding to the audio data and the control data, which are transmitted from the HDMI transmission unit 206 in one way using the TMDS channels #0, #1, #2. In this case, the differential signal corresponding to the pixel data and the differential signal corresponding to the audio data and the control data are received in synchronization with the pixel clock transmitted from the HDMI transmission unit 206 in the TMDS clock channel.

The transmission channels of the HDMI system include transmission channels called a DDC (Display Data Channel) 83 and a CEC line 84 in addition to the above TMDS channels #0 to #2 and the TMDS clock channel. The DDC 83 includes two signal lines, not shown, included in the HDMI cable 400. The DDC 83 is used by the HDMI transmission unit 206 to read E-EDID (Enhanced Extended Display Identification Data) from the HDMI reception unit 303.

The HDMI reception unit 303 includes not only the HDMI receiver 82 but also an EDID ROM (Read Only Memory) 85 storing E-EDID which is performance information about the performance of the HDMI reception unit 303 (Configuration/capability). For example, the HDMI transmission unit 206 reads, via the DDC 83, the E-EDID from the HDMI reception unit 303 connected via the HDMI cable 400, in response to a request of the CPU 211 (see Fig. 4).

The HDMI transmission unit 206 transmits the read E-EDID to the CPU 211. The CPU 211 stores the E-EDID to the flash ROM 212 or the DRAM 213. As explained below, this E-EDID may include information indicating whether transmission without any picture frame conversion is requested or not.

The CEC line 84 includes a signal line, not shown, included in the HDMI cable 400, and is used to communicate control data between the HDMI transmission unit 206 and the HDMI reception unit 303. This CEC line 84 constitutes a control data line.

The HDMI cable 400 includes a line (HPD line) 86 connected to a pin called HPD (Hot Plug Detect). The source device detects connection of the sink device using the line 86. It should be noted that the HPD line 86 is also used as an HEAC-line constituting a bidirectional communication path.

It should be noted that the HDMI cable 400 includes a line (power supply line) 87 used to supply electric power from the source device to the sink device. Further, the HDMI cable 400 includes a utility line 88. It should be noted that this utility line 88 is also used as an HEAC+line constituting the bidirectional communication path.

[Prohibition and limitation of picture frame conversion processing]

Subsequently, the details of prohibition and limitation of this picture frame conversion processing will be explained. As explained above, in the set top box 200, for example, the video signal processing circuit 205 prohibits or limits this picture frame conversion processing in order to prevent a problem occurring in three-dimensional image display due to the picture frame conversion processing.

As explained above, the picture frame conversion processing of the video signal processing circuit 205 is done in order to perform processing for reducing the width of the black belt data region. For example, this picture frame conversion processing is done when the user perform operation to select a predetermined mode. For example, this picture frame conversion processing is performed when a predetermined mode is automatically selected on the basis of detection of the black belt data regions at the right and left ends or at the upper and lower ends of the received three-dimensional image data.

As explained above, when the picture frame conversion processing is performed in response to user's operation or automatically, the CPU 211 determines execution or non-execution of the picture frame conversion processing, and based on the determination result, the video signal processing circuit 205 is controlled.

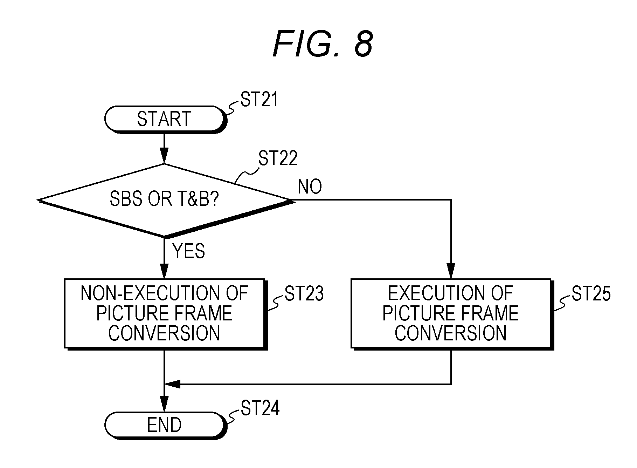

The flowchart of Fig. 8 illustrates a procedure of determining processing of execution or non-execution of the picture frame conversion processing performed by the CPU 211. In step ST21, the CPU 211 starts the determining processing, and thereafter, processing in step ST22 is performed. In this step ST22, the CPU 211 determines whether the transmission method of the received image data is the side-by-side (SBS) method or the top-and-bottom (T&B) method.

When the transmission method is either the side-by-side method or the top-and-bottom method, the CPU 211 determines non-execution of the picture frame conversion processing in step ST23, and thereafter, the determining processing is terminated in step ST24. On the other hand, when the transmission method is neither the side-by-side method nor the top-and-bottom method, the CPU 211 determines execution of the picture frame conversion processing in step ST25, and thereafter, the determining processing is terminated in step ST24.

When the CPU 211 performs the determining processing for determining execution or non-execution of the picture frame conversion processing according to the flowchart of Fig. 8, the CPU 211 acts as follows. When the transmission method of the received image data is either the side-by-side method or the top-and-bottom method, the CPU 211 determines non-execution of the picture frame conversion processing. For this reason, when the transmission method of the received image data is either the side-by-side method or the top-and-bottom method, the video signal processing circuit 205 prohibits the picture frame conversion processing.

As explained above, when the received image data are three-dimensional image data of the side-by-side method (side panel format) or three-dimensional image data of the top-and-bottom method (letterbox format), the picture frame conversion processing is performed, and this causes a problem in three-dimensional image display (see Figs. 20(a) and 20(b)). Therefore, as explained above, when the transmission method of the received image data is either the side-by-side method or the top-and-bottom method, the video signal processing circuit 205 is prohibited from performing the picture frame conversion processing, so that this suppresses a problem occurring in three-dimensional image display.

In the determining processing of the flowchart of Fig. 8, when the transmission method of the received image data is either the side-by-side method or the top-and-bottom method, the CPU 211 immediately determines non-execution of the picture frame conversion processing. However, it may be possible for the CPU 211 to determine non-execution of the picture frame conversion processing with a further condition that the television receiver 300 requests transmission of the three-dimensional image data without any picture frame conversion.

In this case, television receiver 300 registers information indicating whether transmission of the three-dimensional image data without any picture frame conversion is requested or not (request information) to the Vendor Specific Data Block (VSDB) within the E-EDID structure. The CPU 211 of the set top box 200 obtains E-EDID from the television receiver 300 when, e.g., the power is turned on, so that the CPU 211 can obtain the request information. It should be noted that the CPU 211 can also use communication with the CEC line 84 of the HDMI cable 400 (see Fig. 7) to obtain, from the television receiver 300, information indicating whether transmission of the three-dimensional image data without any picture frame conversion is requested or not.

[E-EDID structure]

As explained above, for example, the HDMI transmission unit 206 reads the E-EDID via the DDC 83 from the HDMI reception unit 303 connected via the HDMI cable 400 in response to the request of the CPU 211 (see Fig. 4). Then, the CPU 211 obtains information indicating whether transmission of the three-dimensional image data without any picture frame conversion is requested or not (request information) from this E-EDID (request information).

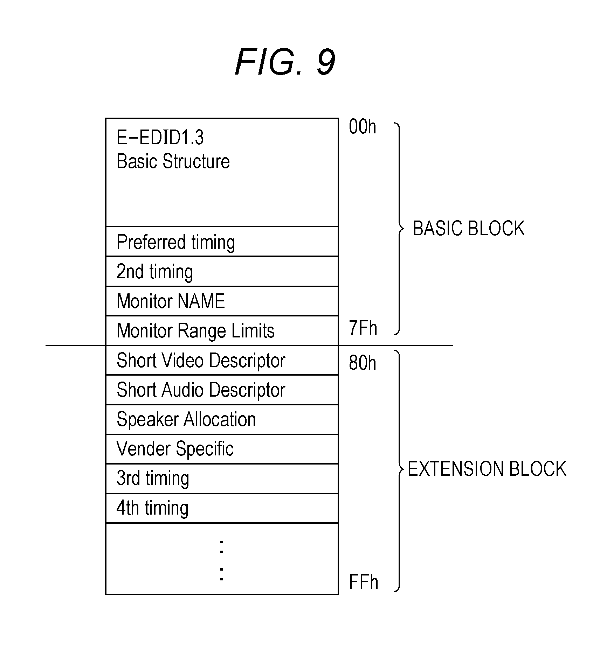

Fig. 9 illustrates an example of data structure of the E-EDID. This E-EDID includes a basic block and an expansion block. At the head of the basic block, data defined in the E-EDID1.3 standard represented in "E-EDID1.3 Basic Structure" are arranged. In the basic block, timing information "Preferred timing" for maintaining compatibility with conventional EDID is subsequently arranged. In the basic block, timing information "2nd timing", which is different from "Preferred timing", for maintaining compatibility with conventional EDID is subsequently arranged.

In the basic block, information "Monitor NAME" indicating the name of a display apparatus is arranged subsequent to "2nd timing". In the basic block, information "Monitor Range Limits" indicating the number of pixels that can be displayed when the aspect ratio is 4: 3 and 16: 9 is subsequently arranged.

At the head of the expansion block, "Short Video Descriptor" is arranged. This is information indicating whether the displayable image size (resolution), the frame rate, and information indicating whether it is interlace or progressive. Subsequently, "Short Audio Descriptor" is arranged. This is information such as a reproducible audio codec method, sampling frequency, cutoff band, the number of codec bits. Subsequently, information "Speaker Allocation" about right and left speakers is arranged.

In addition, in the expansion block, data "Vender Specific" defined unique to each manufacturer are arranged subsequent to "Speaker Allocation". In the expansion block, timing information "3rd timing" for maintaining compatibility with conventional EDID is subsequently arranged. In the expansion block, timing information "4th timing" for maintaining compatibility with conventional EDID is further subsequently arranged.

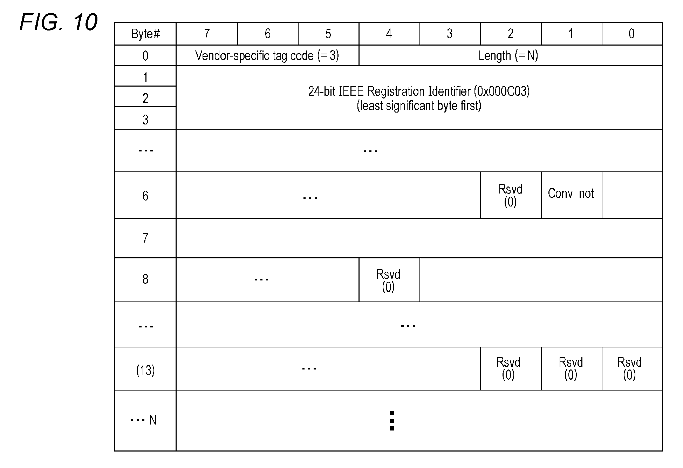

Fig. 10 illustrates an example of data structure of HDMI Vendor Specific Data Block (VSDB). In the 0-th block, a header "Vendor-Specific tag code (=3)" indicating a data region of data "Vender Specific" is arranged. In the 0-th block, information "Length (=N)" indicating the length of data "Vender Specific" is arranged. In the first block to the third block, information indicating a number "0x000C03" registered for HDMI (R) represented by "24 bit IEEE Registration Identifier (0x000C03) LSB first" is arranged.

A flag "Conv_not" of one bit is newly defined and arranged in a predetermined reserve bit of this HDMI Vendor Specific Data Block (VSDB), e.g., the first bit of the six-th block in this example. This flag is information indicating whether the three-dimensional image data without any picture frame conversion is transmitted to the set top box 200, i.e., whether non-execution of the picture frame conversion is requested (request information). When non-execution of the picture frame conversion is requested, "Conv_not=1" is set. On the other hand, when non-execution of the picture frame conversion is not requested, "Conv_not=0" is set.

In the example of structure of the HDMI Vendor Specific Data Block (VSDB) as shown in Fig. 10, one-bit flag "Conv_not" is arranged in the first bit of the six-th block. However, this is not necessarily be arranged at this position. This flag "Conv_not" may be arranged in bit positions in other reserve states, e.g., the second bit of the six-th block, the fourth bit of the eighth block, the 0-th bit to the second bit of the thirteenth block.

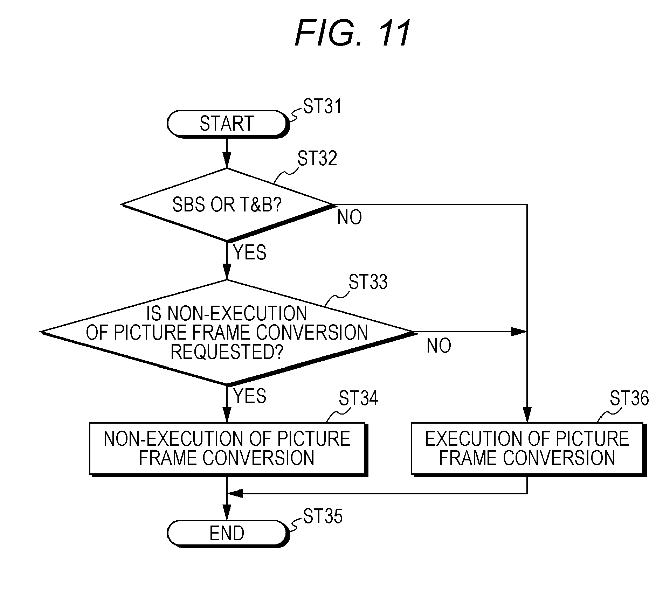

The flowchart of Fig. 11 illustrates a procedure of determining processing of execution or non-execution of the picture frame conversion processing performed by the CPU 211 in view of the request information given by the television receiver 300. In step ST31, the CPU 211 starts the determining processing, and thereafter, proceeds to processing of step ST32. In this step ST32, the CPU 211 determines whether the transmission method of the received image data is the side-by-side (SBS) method or the top-and-bottom (T&B) method.

When the transmission method of the received image data is either the side-by-side method or the top-and-bottom method, the CPU 211 proceeds to processing in step ST33. In this step ST33, the CPU 211 determines whether the television receiver 300 requests non-execution of the picture frame conversion, on the basis of information indicating whether non-execution of the picture frame conversion is requested or not (request information) "Conv_not" obtained from the E-EDID.

When "Conv_not=1" holds, and the television receiver 300 requests non-execution of the picture frame conversion, the CPU 211 returns back to the processing in step ST34. The CPU 211 determines non-execution of the picture frame conversion processing in step ST34, and thereafter, the determining processing is terminated in step ST35.

When the received image data are determined to be of neither the side-by-side method nor the top-and-bottom method in step ST32, and the television receiver 300 is determined not to request non-execution of the picture frame conversion in step ST33, the CPU 211 proceeds to processing in step ST36. The CPU 211 determines execution of the picture frame conversion processing in step ST36, and thereafter, the determining processing is terminated in step ST35.

When the CPU 211 performs the determining processing for determining execution or non-execution of the picture frame conversion processing according to the flowchart of Fig. 11, the CPU 211 also acts as follows. When the transmission method of the received image data is either the side-by-side method or the top-and-bottom method, the CPU 211 determines non-execution of the picture frame conversion processing. Therefore, the video signal processing circuit 205 is prohibited from performing the picture frame conversion processing, so that this suppresses a problem occurring in three-dimensional image display.

When the CPU 211 performs the determining processing for determining execution or non-execution of the picture frame conversion processing according to the flowchart of Fig. 11, the CPU 211 also acts as follows. The CPU 211 determines non-execution of the picture frame conversion processing, on condition that the television receiver 300 requests non-execution of the picture frame conversion. More specifically, the television receiver 300 can control execution or non-execution of the picture frame conversion processing in the set top box 200.

In the determining processing of the flowchart of Fig. 8, when the transmission method of the received image data is either the side-by-side method or the top-and-bottom method, the CPU 211 immediately determines non-execution of the picture frame conversion processing. However, even when the transmission method of the received image data is either the side-by-side method or the top-and-bottom method, a problem may not occur in three-dimensional image display in the picture frame conversion processing.

More specifically, a problem occurs in three-dimensional image display in the picture frame conversion processing, when the three-dimensional image data are of the side-by-side method (side panel format), and there is a black belt data region between the left eye image data region and the right eye image data region (see Figs. 20(a) and Fig. 3(c)). A problem occurs in three-dimensional image display of the picture frame conversion processing, when the three-dimensional image data are of the top-and-bottom method (letterbox format), and there is a black belt data region between the left eye image data region and the right eye image data region (see Figs. 20(b) and Fig. 3(g)).

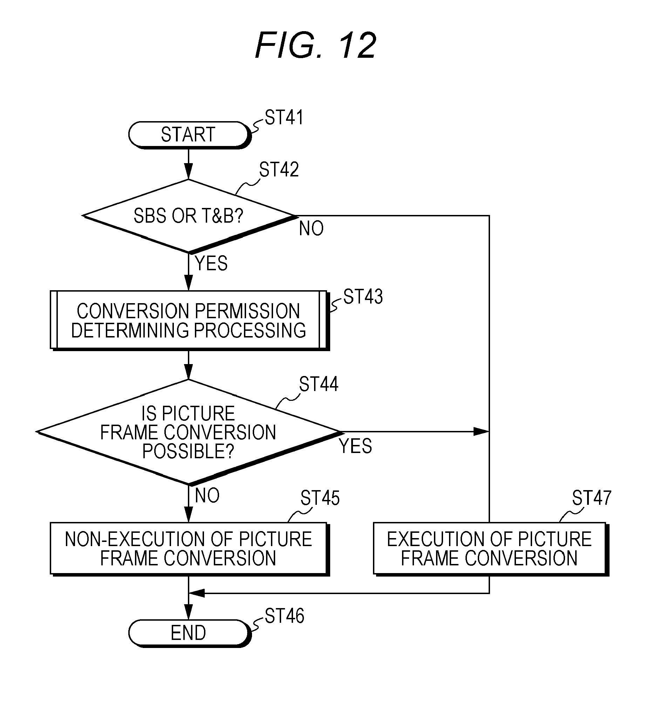

The flowchart of Fig. 12 illustrates a procedure of determining processing of execution or non-execution of the picture frame conversion processing performed by the CPU 211, in view of the 3D format of the side-by-side method and the top-and-bottom method (see Fig. 3).

In step ST41, the CPU 211 starts the determining processing, and thereafter, processing in step ST42 is performed. In this step ST42, the CPU 211 determines whether the transmission method of the received image data is the side-by-side (SBS) method or the top-and-bottom (T&B) method.

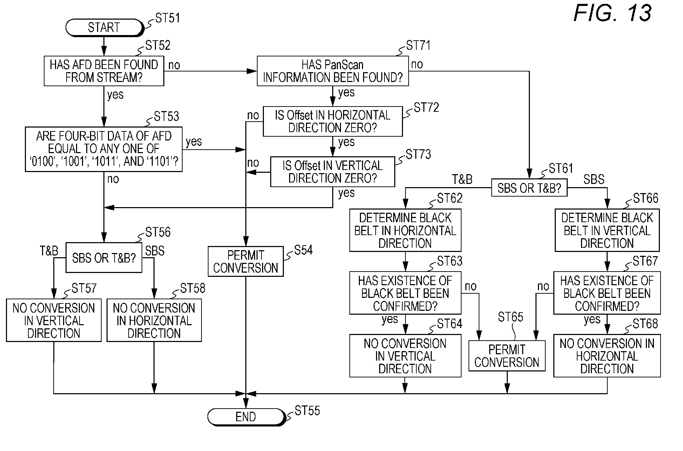

When the transmission method of the received image data is either the side-by-side method or the top-and-bottom method, the CPU 211 proceeds to processing in step ST43. In this step ST43, the CPU 211 performs the conversion permission determining processing. The flowchart of Fig. 13 illustrates the procedure of conversion permission determining processing performed by the CPU 211.

In step ST51, the CPU 211 starts the determining processing, and thereafter, processing in step ST52 is performed. In this step 52, the CPU 211 determines whether an AFD (Active Format Description) is found from the image data stream. This AFD is an option, and the AFD may not be included in the image data stream.

When the AFD is found, the CPU 211 proceeds to processing in step ST53. As explained above, when four-bit data representing the active format (Active_format) in the AFD indicate "full" (16: 9), i.e., when the four-bit data are those other than '0100', '1001', '1011', '1101', this means that no black belt is inserted in order to make the picture frame into 16: 9.

In this step ST53, the CPU 211 determines whether the four-bit data of the AFD are equal to any one of '0100', '1001', '1011', '1101'. When the four-bit data of the AFD are determined to be equal to any one of them, the CPU 211 determines that "the picture frame conversion is permitted" in step ST54, and thereafter, the determining processing is terminated in step ST55.

When the four-bit data of the AFD are determined to be equal to none of them in step ST53, the CPU 211 proceeds to processing in step ST56. In this step ST56, the CPU 211 determines whether the received image data are of the side-by-side (SBS) method or the top-and-bottom (T&B) method. The CPU 211 proceeds to the processing of step ST57 when the received image data are of the top-and-bottom method. On the other hand, the CPU 211 proceeds to the processing of step ST58 when the received image data are of the side-by-side method.

The CPU 211 determines that "conversion is not performed in the vertical direction" in step ST57, and thereafter, the determining processing is terminated in step ST55. The 3D format of the top-and-bottom method in the determination in step ST56 includes the cases of (d), (e), (g) of Fig. 3. When the 3D format includes a black belt data region extending in the horizontal direction between the left eye image data region and the right eye image data region as shown in Fig. 3(g), a problem occurs in three-dimensional image display if the picture frame conversion processing including the conversion in the vertical direction is performed. When "the conversion is determined not to be performed in the vertical direction", and, for example, when the 3D format is as shown in Fig. 3(g), the picture frame conversion processing including the conversion in the vertical direction is prohibited, and a problem does not occur in three-dimensional image display.

The CPU 211 determines that "conversion is not performed in the horizontal direction" in step ST58, and thereafter, the determining processing is terminated in step ST55. The 3D format of the side-by-side method in the determination in step ST56 includes the cases of (c), (f), (h) of Fig. 3. When the 3D format includes a black belt data region extending in the vertical direction between the left eye image data region and the right eye image data region as shown in Fig. 3(c), a problem occurs in three-dimensional image display if the picture frame conversion processing including the conversion in the horizontal direction is performed. When "the conversion is determined to be performed in the horizontal direction", and, for example, when the 3D format is as shown in Fig. 3(c), the picture frame conversion processing including the conversion in the horizontal direction is prohibited, and a problem does not occur in three-dimensional image display.

When the AFD cannot be found in step ST52, the CPU 211 determines whether pan scan information can be found from the image data stream in step ST71.

In H.264, pan scan information called "Pan-scan rectangle SEI message" can be added to the image data stream (encoded stream). This pan scan information is rectangular region information indicating the display position of the original image in the entire screen when encoding process is performed with an aspect ratio different from the aspect ratio of the original image using a side panel format having black belt-like portions at the right and left of the screen and a letterbox format having black belt-like portions at the top and bottom of the screen.

When the pan scan information is found in step ST71, the CPU 211 proceeds to processing in step ST72. In this step ST72, the CPU 211 determines whether the offset in the horizontal direction is zero or not. When this horizontal direction offset is determined not to be zero, the CPU 211 determines that the black belt data regions at both of the right and left ends are determined to be inserted after the three-dimensional image data are converted into those of the side-by-side method or the top-and-bottom method (L/R interleave image data) (see Figs. 3(a), 3(b)). Accordingly, the CPU 211 determines that "the picture frame conversion is permitted" in step ST54, and thereafter, the determining processing is terminated in step ST55.

On the other hand, when the horizontal direction offset is determined to be zero, the CPU 211 proceeds to the processing in step ST73. In this step ST73, the CPU 211 determines whether the offset in the vertical direction is zero or not. When this vertical direction offset is determined not to be zero, the CPU 211 determines that the black belt data regions at both of the upper and lower ends are determined to be inserted after the three-dimensional image data are converted into those of the side-by-side method or the top-and-bottom method (L/R interleave image data) (see Figs. 3(i), 3(j)). Accordingly, the CPU 211 determines that "the picture frame conversion is permitted" in step ST54, and thereafter, the determining processing is terminated in step ST55.

On the other hand, when the vertical direction offset is determined to be zero in step ST73, the horizontal direction offset is also at this occasion, and the CPU 211 makes a determination as follows. More specifically, the CPU 211 determines that no black belt data region is inserted into the image data at all, or that the black belt data region is inserted before the three-dimensional image data are converted into those of the side-by-side method or the top-and-bottom method (L/R interleave image data). Accordingly, the CPU 211 proceeds to the processing in step ST56 to perform the same processing as that explained above. More specifically, in the side-by-side (SBS) method, "the conversion is determined not to be performed in the horizontal direction" in step ST58. On the other hand, in the top-and-bottom (T&B) method, "the conversion is determined not to be performed in the vertical direction" in step ST57.

When pan scan information cannot be found in step ST71, the CPU 211 proceeds to the processing in step ST61. In this step ST61, the CPU 211 determines whether the received image data are of the side-by-side (SBS) method or the top-and-bottom (T&B) method. The CPU 211 proceeds to the processing of step ST62 when the received image data are of the top-and-bottom method.

In this step ST62, the CPU 211 makes black belt determination as to whether the received image data of the top-and-bottom method include a black belt data region extending in the horizontal direction between the left eye image data region and the right eye image data region. In this case, the CPU 211 makes the determination by processing the received three-dimensional image data. For example, the CPU 211 make the determination by scanning, in the horizontal direction, a vertically central portion of the image and therearound. When a pixel data of black level are found continuously, the black belt data region extending in the horizontal direction is determined to exist between the left eye image data region and the right eye image data region.

Subsequently, in step ST63, the CPU 211 determines whether existence of black belt data region extending in the horizontal direction can be found between the left eye image data region and the right eye image data region or not. When the existence can be found, the CPU 211 proceeds to the processing in step ST64. In this step ST64, the CPU 211 determines that "conversion is not performed in the vertical direction", and thereafter, the determining processing is terminated in step ST55. When "the conversion is determined not to be performed in the vertical direction", and, for example, when the 3D format is as shown in Fig. 3(g), the picture frame conversion processing including the conversion in the vertical direction is prohibited, and a problem does not occur in three-dimensional image display.

On the other hand, when the existence of black belt data region extending in the horizontal direction is determined not to be found between the left eye image data region and the right eye image data region in step ST63, the CPU 211 determines that "picture frame conversion is permitted" in step ST65, and thereafter, the determining processing is terminated in step ST55.

When the received image data are determined to be of the side-by-side method in step ST61, the CPU 211 proceeds to the processing in step ST66. In this step ST66, the CPU 211 makes black belt determination as to whether the received image data of the side-by-side method include a black belt data region extending in the vertical direction between the left eye image data region and the right eye image data region.

In this case, the CPU 211 makes the determination by processing the received three-dimensional image data. For example, the CPU 211 make the determination by scanning, in the vertical direction, a horizontally central portion of the image and therearound. When a pixel data of black level are found continuously, the black belt data region extending in the vertical direction is determined to exist between the left eye image data region and the right eye image data region.

Subsequently, in step ST67, the CPU 211 determines whether existence of black belt data region extending in the vertical direction can be found between the left eye image data region and the right eye image data region or not. When the existence can be found, the CPU 211 proceeds to the processing in step ST68. In this step ST68, the CPU 211 determines that "conversion is not performed in the horizontal direction", and thereafter, the determining processing is terminated in step ST55. When "the conversion is determined to be performed in the horizontal direction", and, for example, when the 3D format is as shown in Fig. 3(c), the picture frame conversion processing including the conversion in the horizontal direction is prohibited, and a problem does not occur in three-dimensional image display.

On the other hand, when the existence of black belt data region extending in the vertical direction is determined not to be found between the left eye image data region and the right eye image data region in step ST67, the CPU 211 determines that "picture frame conversion is permitted" in step ST65, and thereafter, the determining processing is terminated in step ST55.

Back to the flowchart of Fig. 12, the CPU 211 proceeds to the processing of step ST44 after the determining processing of step ST43. In this step ST44, the CPU 211 determines whether picture frame conversion processing in a predetermined mode selected by user operation or selected automatically is possible or not. For example, when the CPU 211 determines that "the conversion is not performed in the vertical direction" in step ST43, and when the picture frame conversion processing of the selected predetermined mode includes conversion in the vertical direction, the CPU 211 determines that the picture frame conversion is impossible.

For example, when the CPU 211 determines that "the conversion is not performed in the horizontal direction" in step ST43, and when the picture frame conversion processing of the selected predetermined mode includes conversion in the horizontal direction, the CPU 211 determines that the picture frame conversion is impossible. However, when the received three-dimensional image data are of either the side-by-side method or the top-and-bottom method, and when nonlinear scaling processing such as wide zoom mode explained above is performed, the relative positions of the left eye image and the right eye image are shifted from, the CPU 211 determines that the picture frame conversion is impossible. In other words, in this case, the CPU 211 determines that the picture frame conversion is impossible even when "the picture frame conversion is determined to be permitted" in step ST43.

When the CPU 211 determines that the picture frame conversion is impossible, the CPU 211 determines non-execution of the picture frame conversion in step ST45, and thereafter, the determining processing is terminated in step ST46. When the received image data are determined to be of neither the side-by-side method nor the top-and-bottom method in step ST42, and the picture frame conversion is determined to be possible in step ST44, the CPU 211 proceeds to processing in step ST47. The CPU 211 determines execution of the picture frame conversion processing in step ST47, and thereafter, the determining processing is terminated in step ST46.

When the CPU 211 performs the determining processing for determining execution or non-execution of the picture frame conversion processing according to the flowchart of Fig. 12, the CPU 211 acts as follows. Even when the transmission method of the received image data is either the side-by-side method or the top-and-bottom method, the CPU 211 determines execution of the picture frame conversion processing if no problem occurs in three-dimensional image display. In other words, unless a problem actually occurs in three-dimensional image display, the set top box 200 can perform the picture frame conversion processing for reducing the width of the black belt data region, and the picture frame conversion processing function of the set top box 200 can be effectively utilized.

[Transmission of conversion information of picture frame conversion processing]

Subsequently, the details of the transmission of the conversion information about the picture frame conversion processing will be explained. As explained above, for example, in the set top box 200, the HDMI transmission unit 206 transmits the conversion information about the picture frame conversion processing as well as the three-dimensional image data using the TMDS channel of HDMI, in order to prevent a problem in three-dimensional image display due to the picture frame conversion processing.

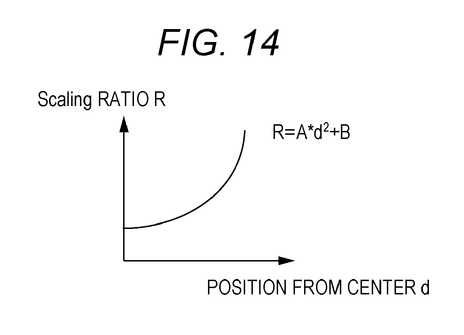

The scaling processing included in the picture frame conversion processing of each mode which is performed by the video signal processing circuit 205 can be expressed with the following conversion expression (1), where the position from the center of the image before the picture frame conversion is denoted as d, and the scaling ratio of this position d is denoted as R. A, B are coefficients. Fig. 14 illustrates relationship between the position d and the scaling ratio R, where the position d is shown in the horizontal axis, and the scaling ratio R is shown in the vertical axis.

$$R = A*d^2 + B \quad \dots \quad (1)$$

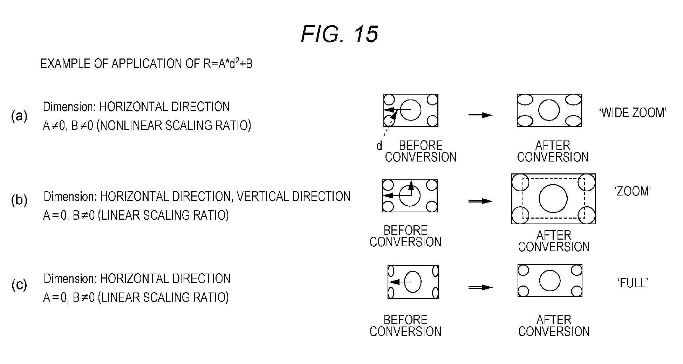

Figs. 15(a) to 15(c) illustrate an example of application of this expression (1). Fig. 15(a) illustrates a case where the expression (1) is applied to the picture frame conversion processing of the "wide zoom mode". In the "wide zoom mode", this expression (1) is applied to the horizontal direction. In this "wide zoom mode", A is not equal to 0, B is not equal to 0, and the scaling ratio of each position changes in a nonlinear manner.

Fig. 15(b) illustrates a case where the expression (1) is applied to the picture frame conversion processing of the "zoom mode". In this "zoom mode", the expression (1) is applied to the horizontal direction and the vertical direction. In this "zoom mode", A is equal to 0, B is not equal to 0, and the scaling ratio of each position is constant.

Fig. 15(c) illustrates a case where the expression (1) is applied to the picture frame conversion processing of the "full mode". In the "full mode", this expression (1) is applied to the horizontal direction. In this "full mode", A is equal to 0, B is not equal to 0, and the scaling ratio of each position is constant.

In this embodiment, the conversion information about the picture frame conversion processing transmitted to the television receiver 300 using the TMDS channel of HDMI from the set top box 200 is coefficient information about A, B in the above expression (1) and specification information in the two-dimensional direction (dimension) of the conversion, i.e., information in the direction in which the expression (1) is applied. An example of method for transmitting the conversion information about the picture frame conversion processing from the set top box 200 to the television receiver 300 includes, for example, inserting the conversion information about the picture frame conversion processing into the blanking period of the three-dimensional image data and transmitting the conversion information about the picture frame conversion processing. In the method, the CEC line 84 may be used, and further, a bidirectional communication path constituted by the HPD line 86 and the utility line 88 may be used.

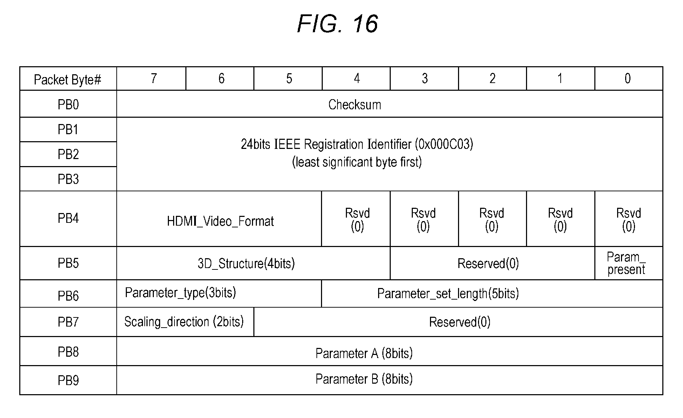

In this embodiment, the conversion information about the picture frame conversion processing is transmitted from the set top box 200 to the television receiver 300 using the HDMI Vendor Specific InfoFrame. Fig. 16 is a packet structure of the HDMI Vendor Specific InfoFrame. This HDMI Vendor Specific InfoFrame is defined in CEA-861-D, and therefore, detailed description thereabout is omitted.

Three-bit information "HDMI_Video_Format" indicating the type of image data is arranged in the seventh bit to the fifth bit in the fourth byte (PB4). When the image data are 3D image data, the three-bit information is "010". As described above, when the image data are 3D image data, four-bit information "3D_Structure" indicating the TMDS transmission data structure is arranged in the seventh bit and the fourth bit in the fifth byte (PB5).

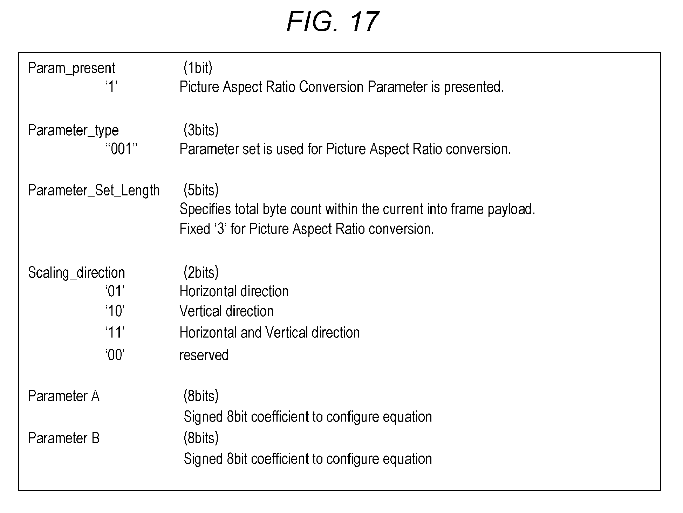

One-bit information "Param_present" is arranged in the 0-th bit in the fifth byte (PB5). This information indicates whether a parameter exists or not as shown in Fig. 17. In this case, the parameter is conversion information about the picture frame conversion processing (conversion parameter). "1" indicates existence of parameter.

Three-bit information "Parameter_type" is arranged in the seventh bit to the fifth bit in the six-th byte (PB6). This information indicates the type of parameter as shown in Fig. 17. "001" indicates parameter used for the picture frame conversion processing (conversion information). Five-bit information "Parameter_Set_Length" is arranged in the fourth bit to the 0-th bit in the six-th byte (PB6). As shown in Fig. 17, this information represents the number of bytes in the parameter region arranged subsequent thereto.

Two-bit information "Scaling_direction" is arranged in the seventh bit to the six-th bit in the seventh byte (PB7). As shown in Fig. 17, this information indicates specification information in the two-dimensional direction (dimension) of the conversion, i.e., the direction in which the expression (1) is applied. "01" indicates the horizontal direction, "10" indicates the vertical direction, and "11" indicates the horizontal direction and the vertical direction.

Eight-bit information "Parameter A" is arranged in the eighth byte (PB8). This information indicates the coefficient A of the expression (1) as shown in Fig. 17. Eight-bit information "Parameter B" is arranged in the ninth byte (PB9). This information indicates the coefficient B of the expression (1) as shown in Fig. 17.

As explained above, in the 3D signal processing unit 301 of the television receiver 300, when a problem occurs in three-dimensional image display due to the picture frame conversion processing which is performed on the three-dimensional image data in the set top box 200, inverse-conversion processing is performed on the three-dimensional image data given by the set top box 200. In this case, the conversion information about the picture frame conversion processing (the coefficient information about A, B in the expression (1) and the specification information in the two-dimensional direction (dimension) of the conversion) is obtained from the packet of the HDMI Vendor Specific InfoFrame, and the inverse-conversion processing is performed. As described above, the 3D signal processing unit 301 performs the inverse-conversion processing to attain the state before the picture frame conversion processing, so that a problem does not occur in three-dimensional image display.

Examples of transmission of the conversion information about the picture frame conversion processing from the set top box 200 to the television receiver 300 include a case where the picture frame conversion processing is performed in all the cases, a case where the transmission method is the side-by-side method or the top-and-bottom method, and further, a case where a problem actually occurs in three-dimensional image display.

As described above, the three-dimensional image data having been subjected to the picture frame conversion processing as well as the conversion information about the picture frame conversion processing are transmitted from the set top box 200 to the television receiver 300, so that a problem does not occur in three-dimensional image display due to the picture frame conversion processing in the television receiver 300. More specifically, in this case, when a problem occurs in three-dimensional image display due to the picture frame conversion processing in the television receiver 300, the state before the picture frame conversion processing can be attained by performing the inverse-conversion processing on the three-dimensional image data on the basis of the conversion information, and this can prevent a problem from occurring in three-dimensional image display.

<2. Modification>

In the above embodiment, the set top box 200 is configured to receive three-dimensional image data from a broadcast signal given by the broadcast station 100. Alternatively, the set top box 200 may also receive three-dimensional image data from a streaming server via a network.

In the above embodiment, the set top box 200 is configured to directly transmit the three-dimensional image data received by the digital tuner 204 to the television receiver 300. Alternatively, the set top box 200 may be configured such that three-dimensional image data received by the digital tuner 204 is accumulated in a storage, not shown, and the three-dimensional image data are read from the storage with predetermined timing, so that the read three-dimensional image data are transmitted to the television receiver 300. The predetermined timing is, for example, timing of user's playback operation.

In the above embodiment, the set top box 200 is configured to transmit the received three-dimensional image data to the television receiver 300. However, instead of the television receiver 300, the received three-dimensional image data are configured to be transmitted to, e.g., a monitor apparatus or a projector. Instead of the set top box 200, for example, a recorder with a reception function or a personal computer may be employed in the configuration.

In the above embodiment, the set top box 200 and the television receiver 300 are connected via the HDMI cable 400. However, it is to be understood that this invention can also be applied in the same manner even when the set top box 200 and the television receiver 300 are configured to be connected via a digital interface like the HDMI or connected wirelessly.

INDUSTRIAL APPLICABILITY

This invention can be applied to a set top box and the like that receives three-dimensional image data, transmitting the three-dimensional image data to a television receiver via a digital interface such as HDMI, and causing the television receiver to display the three-dimensional image.

REFERENCE SIGNS LIST

| 10 | Three-dimensional image display system |
|---|---|
| 85 | EDID ROM |
| 100 | Broadcast station |
| 111 | Data retrieving unit |
| 111a | Data recording medium |
| 112 | Video framing unit |
| 113 | Video encoder |
| 114 | Audio encoder |
| 115 | Multiplexer |
| 200 | Set top box |
| 201 | Bit stream processing unit |
| 202 | HDMI terminal |
| 203 | Antenna terminal |
| 204 | Digital tuner |
| 205 | Video signal processing circuit |
| 206 | HDMI transmission unit |
| 207 | Audio signal processing circuit |
| 211 | CPU |
| 212 | Flash ROM |
| 213 | DRAM |
| 214 | Internal bus |
| 215 | Remote controller reception unit |
| 216 | Remote controller transmission device |
| 300 | Television receiver |
| 301 | 3D signal processing unit |
| 302 | HDMI terminal |
| 303 | HDMI reception unit |
| 304 | Antenna terminal |
| 305 | Digital tuner |
| 306 | Bit stream processing unit |
| 307 | Video/graphic processing circuit |
| 308 | Panel drive circuit |
| 309 | Display panel, |
| 310 | Audio signal processing circuit |
| 311 | Audio amplification circuit |
| 312 | Speaker |
| 321 | CPU |
| 322 | Flash ROM |
| 323 | DRAM |
| 324 | Internal bus |
| 325 | Remote controller reception unit |
| 326 | Remote controller transmission device |
| 400 | HDMI cable |

**Claims**

1. An image data transmission apparatus comprising:

an image data reception unit for receiving three-dimensional image data for displaying a three-dimensional image;
an image data processing unit for processing the three-dimensional image data received by the image data reception unit;
an image data transmission unit for transmitting the three-dimensional image data, which have been output from the image data processing unit, via a transmission path to an external device; and

a control unit for controlling the image data processing unit,

wherein when a transmission method of the three-dimensional image data received by the image data reception unit is a side-by-side method or a top-and-bottom method, the control unit controls the image data processing unit not to perform picture frame conversion processing on the three-dimensional image data.

2. The image data transmission apparatus according to claim 1, wherein when the transmission method of the three-dimensional image data received by the image data reception unit is the side-by-side method or the top-and-bottom method, and when the external device requests transmission of the three-dimensional image data without the picture frame conversion processing, the control unit controls the image data processing unit not to perform the picture frame conversion processing on the three-dimensional image data.

3. The image data transmission apparatus according to claim 2, wherein the control unit reads and obtains, via the transmission path from a storage unit provided in the external device, information indicating whether transmission of the three-dimensional image data without the picture frame conversion processing is requested or not.

4. A control method for an image data transmission apparatus comprising:

an image data reception unit for receiving three-dimensional image data for displaying a three-dimensional image;

an image data processing unit for processing the three-dimensional image data received by the image data reception unit; and

an image data transmission unit for transmitting the three-dimensional image data, which have been output from the image data processing unit, via a transmission path to an external device,

wherein when a transmission method of the three-dimensional image data received by the image data reception unit is a side-by-side method or a top-and-bottom method, the image data processing unit is controlled not to perform picture frame conversion processing on the three-dimensional image data.

5. An image data reception apparatus comprising:

an image data reception unit for receiving three-dimensional image data, which are used to display a three-dimensional image, from an external device via a transmission path; and

a control unit for controlling, via the transmission path, a picture frame conversion function for the three-dimensional image data in the external device.

6. The image data reception apparatus according to claim 5, wherein the control unit registers information indicating whether transmission of three-dimensional image data without picture frame conversion processing is requested or not, to a storage unit readable by the external device via the transmission path.

7. An image data transmission apparatus comprising:

an image data reception unit for receiving three-dimensional image data for displaying three-dimensional image data;

an image data processing unit for processing the three-dimensional image data received by the image data reception unit;

an image data transmission unit for transmitting the three-dimensional image data, which have been output from the image data processing unit, via a transmission path to an external device; and

a control unit for controlling the image data processing unit,

wherein when the three-dimensional image data received by the image data reception unit are of either a side-by-side method or a top-and-bottom method, and when the three-dimensional image data include a black belt data region between a left eye image data region and a right eye image data region, the control unit controls the image data processing unit not to perform at least picture frame conversion processing including conversion in a direction perpendicular to a longitudinal direction of the black belt data region on the three-dimensional image data.

8. The image data transmission apparatus according to claim 7, wherein the control unit determines whether the black belt data region exists in the three-dimensional image data, on the basis of active format information attached to the three-dimensional image data.

9. The image data transmission apparatus according to claim 7, wherein the control unit determines whether the black belt data region exists in the three-dimensional image data, on the basis of pan scan information attached to the three-dimensional image data.

10. The image data transmission apparatus according to claim 7, wherein the control unit determines whether the black belt data region exists in the three-dimensional image data, by processing the three-dimensional image data.

11. The image data transmission apparatus according to claim 10, wherein the control unit determines whether the black belt data region exists in the three-dimensional image data in such a manner that, when the three-dimensional image data are of a side-by-side method, the determination is made by scanning, in a vertical direction, a horizontally central portion of the image and therearound, and when the three-dimensional image data are of a top-and-bottom method, the determination is made by scanning, in a horizontal direction, a vertically central portion of the image and therearound.

12. The image data transmission apparatus according to claim 7, wherein when the three-dimensional image data received by the image data reception unit are of either a side-by-side method or a top-and-bottom method, and when the three-dimensional image data include a black belt data region between a left eye image data region and a right eye image data region, the control unit permits the image data processing unit to perform picture frame conversion processing by means of linear transformation in the longitudinal direction of the black belt data region.

13. The image data transmission apparatus according to claim 7, wherein when the three-dimensional image data received by the image data reception unit are of either a side-by-side method or a top-and-bottom method, and when the three-dimensional image data do not include a black belt data region between a left eye image data region and a right eye image data region, the control unit permits the image data processing unit to perform picture frame conversion processing by means of linear transformation in any one of the horizontal direction and the vertical direction or both of the horizontal direction and the vertical direction.

14. A control method for an image data transmission apparatus comprising:

an image data reception unit for receiving three-dimensional image data for displaying three-dimensional image data;
an image data processing unit for processing the three-dimensional image data received by the image data reception unit; and
an image data transmission unit for transmitting the three-dimensional image data, which have been output from the image data processing unit, via a transmission path to an external device,
wherein when the three-dimensional image data received by the image data reception unit are of either a side-by-side method or a top-and-bottom method, and when the three-dimensional image data include a black belt data region between a left eye image data region and a right eye image data region, the image data processing unit is controlled not to perform at least picture frame conversion processing including conversion in a direction perpendicular to a longitudinal direction of the black belt data region on the three-dimensional image data.

15. An image data transmission apparatus comprising:

an image data reception unit for receiving three-dimensional image data for displaying a three-dimensional image;
an image data processing unit for processing the three-dimensional image data received by the image data reception unit; and
an image data transmission unit for transmitting the three-dimensional image data, which have been output from the image data processing unit, via a transmission path to an external device,
wherein when the image data processing unit performs the picture frame conversion processing on the three-dimensional image data, the image data transmission unit transmits the three-dimensional image data having been subjected to the picture frame conversion processing as well as conversion information about the picture frame conversion processing, via the transmission path to the external device.

16. The image data transmission apparatus according to claim 15, wherein the conversion information includes coefficient information of conversion expression of scaling included in the picture frame conversion processing and specification information in a two-dimensional direction of conversion.

17. The image data transmission apparatus according to claim 16, wherein the conversion expression is expressed as $R = A{*}d^2 + B$, where a position from a center of an image before the picture frame conversion is denoted as d, and a scaling ratio of the position d is denoted as R, and the coefficient information is information about the above A, B.

18. The image data transmission apparatus according to claim 15, wherein the image data transmission unit inserts the conversion information into a blanking period of the three-dimensional image data, and transmits the conversion information via the transmission path to the external device.

19. An image data transmission method comprising:

an image data reception step for receiving three-dimensional image data for displaying a three-dimensional image;

an image data processing step for processing the three-dimensional image data received in the image data reception step; and

an image data transmission step for transmitting the three-dimensional image data, which have been output from the image data processing step, via a transmission path to an external device,

wherein when picture frame conversion processing is performed on the three-dimensional image data in the image data processing step, the three-dimensional image data having been subjected to the picture frame conversion processing as well as conversion information about the picture frame conversion processing are transmitted via the transmission path to the external device in the image data transmission step.

20. An image data reception apparatus comprising:

an image data reception unit for receiving three-dimensional image data, which are used to display a three-dimensional image, from an external device via a transmission path; and

an image data processing unit for processing the three-dimensional image data received by the image data reception unit,

wherein the image data processing unit performs picture frame inverse-conversion processing on the three-dimensional image data, on the basis of picture frame conversion information about the three-dimensional image data received together with the three-dimensional image data by the image data reception unit.

# FIG. 1

10

| BROADCAST STATION | | STB | | TV |
|---|---|---|---|---|
| 110 | BSD | 201 | 400 | 301 |
| TRANSMISSION DATA GENERATING UNIT | | BIT STREAM PROCESSING UNIT | | 3D SIGNAL PROCESSING UNIT |
| 100 | | 202    302 | | |
| | | 200 | | 300 |

## FIG. 2

110

DATA RETRIEVING UNIT 111

DATA RECORDING MEDIUM 111a

VIDEO FRAMING UNIT 112

VIDEO ENCODER 113

AUDIO ENCODER 114

MULTIPLEXER 115

→ BSD

## FIG. 3

INPUT L, R — ST1

IS ASPECT RATIO PR (=HORIZONTAL SIZE/VERTICAL SIZE) 16/9? — ST2

PR<16/9

PR>16/9

PR=16/9

CONVERT L, R INTO SBS OR T&B — ST3

ARE BLACK BELTS INSERTED AT FIRST IN ORDER TO MATCH PICTURE FRAME? — ST4

ARE BLACK BELTS INSERTED AT FIRST IN ORDER TO MATCH PICTURE FRAME? — ST9

no

yes

yes

no

CONVERT INTO SBS OR T&B — ST5

INSERT BLACK BELTS — ST7

INSERT BLACK BELTS — ST12

CONVERT INTO SBS OR T&B — ST10

CONVERT INTO SBS OR T&B — ST8

CONVERT INTO SBS OR T&B — ST13

INSERT BLACK BELTS — ST6

★ (c)

(d)

INSERT BLACK BELTS — ST11

(a)

(b)

(e)

(f)

★ (g)

(h)

(i)

(j)

3D FORMAT DISTRIBUTED IN PICTURE FRAME OF ASPECT RATIO OF 16:9

(★) PROBLEM OCCURS IN 3D DISPLAY UPON PICTURE FRAME CONVERSION

## FIG. 4

# FIG. 5

(a) WIDE ZOOM MODE

BEFORE CONVERSION

AFTER CONVERSION

(b) ZOOM MODE

BEFORE CONVERSION

AFTER CONVERSION

(c) FULL MODE

BEFORE CONVERSION

AFTER CONVERSION

## FIG. 6

300

| 323 | 322 | 321 | 325 | 326 |
|-----|-----|-----|-----|-----|
| DRAM | FLASH ROM | CPU | REMOTE CONTROLLER RECEPTION UNIT | REMOTE CONTROLLER TRANSMISSION DEVICE |

324

310 — AUDIO SIGNAL PROCESSING CIRCUIT

311 — AUDIO AMPLIFICATION CIRCUIT

312

304

DIGITAL TUNER
305

BIT STREAM PROCESSING UNIT
306

3D SIGNAL PROCESSING UNIT
301

VIDEO/ GRAPHIC PROCESSING CIRCUIT
307

PANEL DRIVE CIRCUIT
308

DISPLAY PANEL
309

303 — HDMI RECEPTION UNIT

302

## FIG. 7

## FIG. 8

# FIG. 9

| E-EDID1.3<br>Basic Structure | 00h | ⎫ |
|---|---|---|
| Preferred timing | | |
| 2nd timing | | BASIC BLOCK |
| Monitor NAME | | |
| Monitor Range Limits | 7Fh | ⎭ |
| Short Video Descriptor | 80h | ⎫ |
| Short Audio Descriptor | | |
| Speaker Allocation | | |
| Vender Specific | | EXTENSION BLOCK |
| 3rd timing | | |
| 4th timing | | |
| ⋮ | FFh | ⎭ |

*FIG. 10*

| Byte# | 7 | 6 | 5 | 4 | 3 | 2 | 1 | 0 |
|---|---|---|---|---|---|---|---|---|
| 0 | Vendor-specific tag code (=3) | | | Length (=N) | | | | |
| 1 | 24-bit IEEE Registration Identifier (0x000C03) (least significant byte first) | | | | | | | |
| 2 | | | | | | | | |
| 3 | | | | | | | | |
| ... | ... | | | | | | | |
| 6 | ... | | | | | Rsvd (0) | Conv_not | |
| 7 | | | | | | | | |
| 8 | ... | | | Rsvd (0) | | | | |
| ... | ... | | | | | | | |
| (13) | ... | | | | | Rsvd (0) | Rsvd (0) | Rsvd (0) |
| ... N | ⋮ | | | | | | | |

# FIG. 11

START ST31

ST32

SBS OR T&B? NO

YES

ST33

IS NON-EXECUTION
OF PICTURE FRAME CONVERSION
REQUESTED? NO

YES ST34

NON-EXECUTION OF PICTURE
FRAME CONVERSION

ST36

EXECUTION OF PICTURE
FRAME CONVERSION

END ST35

# FIG. 12

START ⌇ST41

ST42

SBS OR T&B? —NO——→

YES

ST43
CONVERSION PERMISSION
DETERMINING PROCESSING

ST44
IS PICTURE
FRAME CONVERSION
POSSIBLE? —YES——→

NO

ST45
NON-EXECUTION OF PICTURE
FRAME CONVERSION

ST47
EXECUTION OF PICTURE
FRAME CONVERSION

END ⌇ST46

*FIG. 13*

# FIG. 14

Scaling RATIO R

$R = A*d^2 + B$

POSITION FROM CENTER d

## FIG. 15

EXAMPLE OF APPLICATION OF $R=A*d^2+B$

(a) Dimension: HORIZONTAL DIRECTION
$A \neq 0, B \neq 0$ (NONLINEAR SCALING RATIO)

d BEFORE CONVERSION → AFTER CONVERSION 'WIDE ZOOM'

(b) Dimension: HORIZONTAL DIRECTION, VERTICAL DIRECTION
$A = 0, B \neq 0$ (LINEAR SCALING RATIO)

BEFORE CONVERSION ⇒ AFTER CONVERSION 'ZOOM'

(c) Dimension: HORIZONTAL DIRECTION
$A = 0, B \neq 0$ (LINEAR SCALING RATIO)

BEFORE CONVERSION ⇒ AFTER CONVERSION 'FULL'

## FIG. 16

| Packet Byte# | 7 | 6 | 5 | 4 | 3 | 2 | 1 | 0 |
|---|---|---|---|---|---|---|---|---|
| PB0 | Checksum | | | | | | | |
| PB1 | 24bits IEEE Registration Identifier (0x000C03)<br>(least significant byte first) | | | | | | | |
| PB2 | | | | | | | | |
| PB3 | | | | | | | | |
| PB4 | HDMI_Video_Format | | | Rsvd<br>(0) | Rsvd<br>(0) | Rsvd<br>(0) | Rsvd<br>(0) | Rsvd<br>(0) |
| PB5 | 3D_Structure(4bits) | | | | Reserved(0) | | | Param_<br>present |
| PB6 | Parameter_type(3bits) | | | Parameter_set_length(5bits) | | | | |
| PB7 | Scaling_direction (2bits) | | Reserved(0) | | | | | |
| PB8 | Parameter A (8bits) | | | | | | | |
| PB9 | Parameter B (8bits) | | | | | | | |

# FIG. 17

Param_present   (1bit)
    '1'      Picture Aspect Ratio Conversion Parameter is presented.


Parameter_type   (3bits)
    "001"     Parameter set is used for Picture Aspect Ratio conversion.


Parameter_Set_Length  (5bits)
          Specifies total byte count within the current into frame payload.
          Fixed '3' for Picture Aspect Ratio conversion.


Scaling_direction   (2bits)
    '01'      Horizontal direction
    '10'      Vertical direction
    '11'      Horizontal and Vertical direction
    '00'      reserved


Parameter A    (8bits)
          Signed 8bit coefficient to configure equation
Parameter B    (8bits)
          Signed 8bit coefficient to configure equation

# FIG. 18

## FIG. 19

| | BROADCAST STATION | STB | TV |
|---|---|---|---|

(a) SBS WITH SIDE PANELS

(b) T&B WITH SIDE PANELS

(c) SBS WITH LETTERBOXES

(d) T&B WITH LETTERBOXES

## FIG. 20

| BROADCAST STATION | STB | TV |

(a) SBS WITH SIDE PANELS

(b) T&B WITH LETTERBOXES

## FIG. 21

(a) T&B WITH SIDE PANELS

(b) SBS WITH LETTERBOXES

<div style="text-align:center">**INTERNATIONAL SEARCH REPORT**</div>

| International application No. |
|---|
| PCT/JP2011/062853 |

**A. CLASSIFICATION OF SUBJECT MATTER**
*H04N13/00*(2006.01)i, *H04N7/173*(2011.01)i

According to International Patent Classification (IPC) or to both national classification and IPC

**B. FIELDS SEARCHED**

Minimum documentation searched (classification system followed by classification symbols)
H04N13/00, H04N7/173

Documentation searched other than minimum documentation to the extent that such documents are included in the fields searched
Jitsuyo Shinan Koho        1922-1996    Jitsuyo Shinan Toroku Koho    1996-2011
Kokai Jitsuyo Shinan Koho   1971-2011   Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-88092 A  (Panasonic Corp.), 15 April 2010 (15.04.2010), entire text; all drawings & WO 2010/026736 A1 | 1-20 |
| A | JP 2002-112285 A  (Matsushita Electric Industrial Co., Ltd.), 12 April 2002 (12.04.2002), entire text; all drawings & US 2002/0163970 A1     & EP 1303146 A1 & WO 2002/009444 A1     & CN 1386381 A | 1-20 |

☐  Further documents are listed in the continuation of Box C.          ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 August, 2011 (08.08.11) | 16 August, 2011 (16.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005006114 A

**Non-patent literature cited in the description**

- *High-Definition Multimedia Interface Specification Version 1.4,* 05 June 2009